# EUROPÄISCHE PATENTSCHRIFT

(11) **EP 3 839 596 B1**
(45) Veröffentlichungstag und Bekanntmachung des Hinweises auf die Patenterteilung: **23.08.2023**
(21) Anmeldenummer: 19219070.0
(22) Anmeldetag: 20.12.2019
(51) Int. Cl.: G06V 10/28, G02B 21/08, G02B 21/36, G06V 10/50, G06V 20/69

(54) **VORRICHTUNG UND VERFAHREN ZUR IDENTIFIKATION VON DECKGLASBEREICHEN EINES OBJEKTTRÄGERS**
DEVICE AND METHOD FOR IDENTIFICATION OF COVERING GLASS AREAS OF AN OBJECT HOLDER
DISPOSITIF ET PROCÉDÉ D'IDENTIFICATION DE ZONES DE VERRE DE RECOUVREMENT D'UNE LAME PORTE-OBJET

(43) Veröffentlichungstag der Anmeldung: 23.06.2021
(73) Patentinhaber: Euroimmun Medizinische Labordiagnostika AG, 23560 Lübeck (DE)
(72) Erfinder: FEIRER, Christian, 23556 Lübeck (DE); BERNITT-RINGERING, Erik, 23564 Lübeck (DE); RATEIKE, Martin, 23689 Pansdorf (DE); SCHWAB, Simon, 23562 Lübeck (DE); STÖCKER, Winfried, 23627 Groß Grönau (DE)

(56) Entgegenhaltungen:
- EP-A2- 1 772 764
- EP-A2- 2 053 535
- EP-A2- 2 402 813
- US-A- 5 812 692
- US-A1- 2007 269 085
- US-A1- 2017 138 855

## Beschreibung

Die Erfindung betrifft eine Vorrichtung, ein Verfahren, ein digitales Bildverarbeitungsverfahren, ein computerimplementiertes Verfahren, ein Computerprogrammprodukt sowie eine Recheneinheit zur Identifikation jeweiliger Deckglasbereiche jeweiliger Deckgläser mit jeweiligen Gewebeschnitten auf einem Objektträger, welcher mehrere optische Kennzeichnungen aufweist.

Im Zuge pathologischer Untersuchungen ist es notwendig, Gewebeschnitte aus einem Patientengewebe nach einer sogenannten Färbung auf einem Objektträger zu positionieren und dann mittels Mikroskopie ein Bild des Gewebes zu erfassen. Ein solcher Objektträger besteht aus einem optisch transparenten Medium, vorzugsweise Glas.

Üblicherweise wird in der Pathologie ein einzelner Gewebschnitt mittels eines einzigen Deckglases auf einem Objektträger positioniert. Es ist jedoch auch möglich, dass ein solcher Objektträger nicht nur einen einzigen Gewebeschnitt sondern mehrere Gewebeschnitte nebeneinander aufweist, wobei ein bestimmter Gewebeschnitt mittels eines bestimmten Deckglases auf dem Objektträger positioniert wird. Der Objektträger weist dann also mehrere Deckgläser mit mehreren Gewebeschnitten auf.

Insbesondere kann dann ein jeweiliges Deckglas mit einer jeweiligen optischen Kennzeichnung versehen werden, vorzugsweise in Form eines Datamatrixcodes. Eine optische Kennzeichnung indiziert Daten, welche insbesondere Patientendaten sein können. Es wird also durch die optische Kennzeichnung bzw. die optische Kennung ermöglicht, den entsprechenden Gewebeschnitt einem bestimmten Patienten oder einer bestimmten Untersuchung zuordnen zu können. Ferner können weitere Informationen durch die optische Kennzeichnung hinterlegt werden.

Die Deckgläser bzw. die Deckglasbereiche weisen jeweils Glaskanten auf, so dass die Deckglasbereiche dadurch voneinander abgegrenzt werden. Sind also auf einem Objektträger mehrere Gewebeschnitte mittels jeweiliger Deckgläser angeordnet und trägt ein jeweiliges Deckglas eine jeweilige optische Kennzeichnung, so besteht die Aufgabe darin, jeweilige Gewebeschnitte jeweiligen optischen Kennzeichnungen zuverlässig zuzuordnen.

Nach einer Erfassung von Bildern des Objektträgers ergibt sich also die Aufgabe, die jeweilige Deckglasbereiche sicher zu identifizieren. Mit anderen Worten: für eine spätere Auswertung eines Bildes eines bestimmten Gewebeschnittes und dessen Zuordnung zu einem bestimmten Patienten oder einer bestimmten Untersuchung muss also zunächst festgestellt werden, welcher Gewebeschnitt mit welchem Deckglas zu welcher optischen Kennzeichnung gehört. Vorzugsweise wird der Gewebeschnitt dann später im Zuge eines hochauflösenden Mikroskopierverfahrens abgescannt.

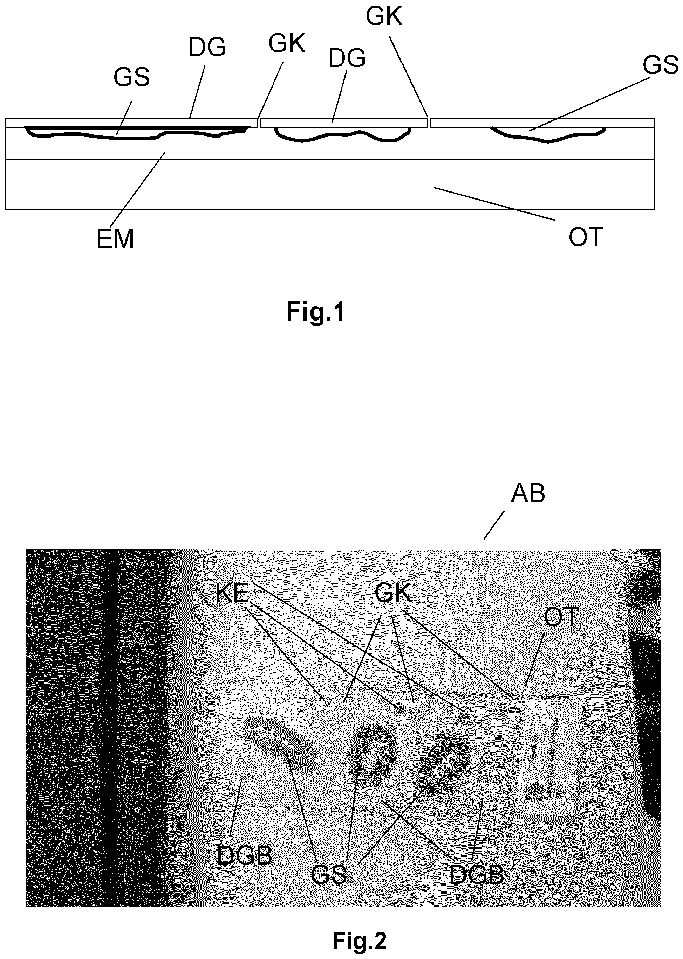

Die Figur 1 zeigt einen Objektträger OT, auf welchem jeweilige Deckgläser DG jeweilige Gewebeschnitte abdecken und entsprechend auf dem Objektträger OT positionieren. Die Deckgläser DG weisen jeweils Glaskanten GK auf. Für eine Fixierung der Deckgläser und der Gewebeschnitte auf dem Träger OT weist der Objektträger ein Eindeckmedium EM auf, welches bei Aufbringen der Deckgläser DG mit den Gewebeschnitten GS auf den Objektträger OT zunächst flüssig ist und dann später nach Positionierung der Deckgläser DG in einen festen Zustand übergeht.

Die Figur 2 zeigt ein Auflichtbild AB eines entsprechenden Objektträgers OT, wobei jeweilige Deckglasbereiche DGB mit jeweiligen Gewebeschnitten GS auch jeweilige optische Kennzeichnungen KE aufweisen. Die Deckglasbereiche DGB werden durch jeweilige Glaskanten GK voneinander abgetrennt.

Eine Detektion einer Glaskante GK zur Bestimmung bzw. Identifizierung eines Deckglasbereiches DGB kann zwar prinzipiell durch Auswertung des Auflichtbildes AB möglich sein. Jedoch wird dies in der Regel eine hohe algorithmische Komplexität erfordern, da die Glaskanten GK sich in ihrer Signalstärke nicht wesentlich von den weiteren Bereichen der Deckgläser abheben. In anderen Fällen kann das Signal der Glaskanten so schwach sein, dass deren Erkennung unmöglich ist.

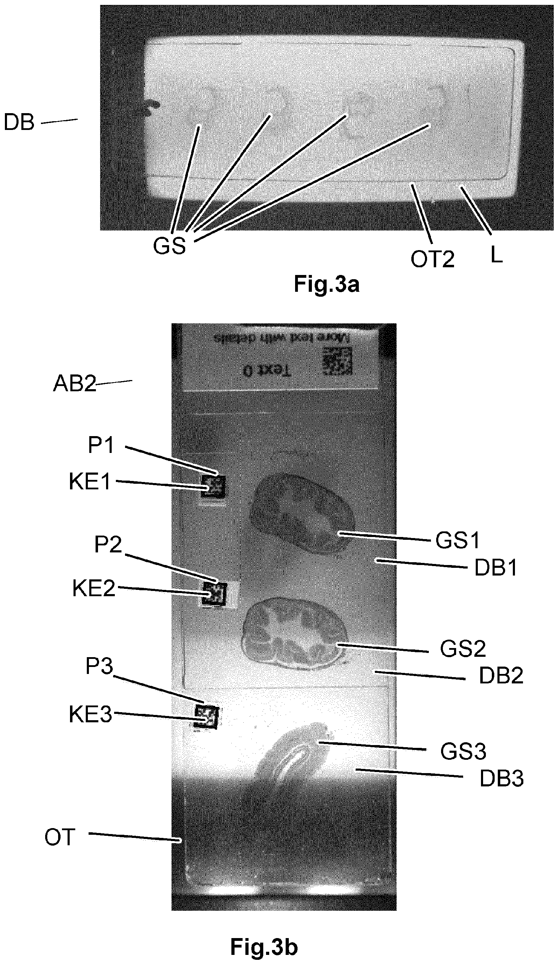

Die Figur 3a zeigt einen weiteren, ähnlichen Objektträger OT2 in einem Durchlichtbild DB, welches dadurch gewonnen wurde, dass der Objektträger OT2 von unten her durch eine flächige Lichtquelle L durchleuchtet wird. Gut sichtbar werden hierbei die Gewebeschnitte GS. Vorhandene Glaskanten der Deckgläser sind jedoch fast gar nicht sichtbar, da sie sich in ihrer Signalstärke von den weiteren Deckglasbereichen nicht hinreichend abheben. Sichtbar sind lediglich die äußeren Glaskanten OGK des Objektträgers OT2. Somit ist eine Identifizierung der Deckglasbereiche auch durch Auswertung eines Durchlichtbildes DB nur schwer möglich. Ein Mikroskop zur Detektion verschiedener Bereiche auf einem Objektträger ist aus der EP 2 402 813 A2 bekannt.

Aufgabe der vorliegenden Erfindung ist es also, mittels Bildgebung und Bildverarbeitung auf Basis eines Bild oder mehrerer Bilder eines Objektträgers jeweilige Gewebeschnitte jeweiligen optischen Kennzeichnungen räumlich und vorzugsweise auch logisch zuordnen zu können.

Die erfindungsgemäße Aufgabe wird gelöst durch die erfindungsgemäße vorgeschlagene Vorrichtung nach Anspruch 1, das erfindungsgemäße Verfahren nach Anspruch 4, das erfindungsgemäße digitale Bildverarbeitungsverfahren nach Anspruch 7, das erfindungsgemäße computerimplementierte Verfahren nach Anspruch 8, das erfindungsgemäße Computerprogrammprodukt nach Anspruch 9 sowie die erfindungsgemäße Recheneinheit nach Anspruch 10.

Vorgeschlagen wird also eine erfindungsgemäße Vorrichtung zur Identifikation jeweiliger Deckglasbereiche jeweiliger Deckgläser mit jeweiligen Gewebeschnitten auf einem Objektträger, welcher mehrere optische Kennzeichnungen aufweist. Die Vorrichtung weist auf: eine flächige Lichtquelle, eine Bilderfassungseinheit, eine Halterungseinheit zum Positionieren des Objektträgers zwischen der flächigen Lichtquelle und der Bilderfassungseinheit, eine zwischen der flächigen Lichtquelle und dem Objektträger reversibel positionierbare Spaltblende, welche mehrere Öffnungsspalte aufweist, eine Beleuchtungseinheit ausgebildet zum Beleuchten jener Oberfläche des Objektträgers, welche der Bilderfassungseinheit zugewandt ist, sowie ferner eine Kontrolleinheit. Die Kontrolleinheit ist ausgebildet, in einem ersten Betriebszustand die flächige Lichtquelle zu aktivieren sowie mittels der Bilderfassungseinheit ein vollständig ausgeleuchtetes Durchlichtbild des Objektträgers zu erfassen, ferner in einem zweiten Betriebszustand die Beleuchtungseinheit zu aktivieren sowie mittels der Bilderfassungseinheit ein Auflichtbild des Objektträgers zu erfassen, ferner in einem dritten Betriebszustand die Spaltblende derart anzusteuern, dass die Spaltblende zwischen der flächigen Lichtquelle und dem Objektträger positioniert ist, und die flächige Lichtquelle zu aktivieren sowie mittels der Bilderfassungseinheit ein partiell abgedunkeltes Durchlichtbild des Objektträgers zu erfassen. Die Kontrolleinheit ist ferner ausgebildet, auf Basis des vollständig ausgeleuchteten Durchlichtbildes, des Auflichtbildes und des partiell abgedunkelten Durchlichtbildes jeweilige Gewebeschnitte jeweiligen optischen Kennzeichnungen zuzuordnen. Vorzugsweise werden die jeweiligen Gewebeschnitte den jeweiligen optischen Kennzeichnungen räumlich und insbesondere auch logisch zugeordnet.

Erfindungsgemäß ist die Kontrolleinheit ferner ausgebildet, auf Basis des Auflichtbildes jeweilige räumliche Positionen jeweiliger optischer Kennzeichnungen zu bestimmen, ferner auf Basis des partiell abgedunkelten Durchlichtbildes jeweilige räumliche Lagen der jeweiligen Deckglasbereiche zu bestimmen, ferner auf Basis des vollständig ausgeleuchteten Durchlichtbildes jeweilige räumliche Lagen der jeweiligen Gewebeschnitte zu bestimmen sowie auf Basis der jeweiligen räumlichen Positionen der jeweiligen optischen Kennzeichnungen, auf Basis der jeweiligen räumlichen Lagen der jeweiligen Deckglasbereiche und auf Basis der jeweiligen räumlichen Lagen der jeweiligen Gewebeschnitte die jeweiligen Gewebeschnitte den jeweiligen optischen Kennzeichnungen zuzuordnen.

Vorteilhafte Ausführungsformen der Erfindung sind Gegenstand der abhängigen Ansprüche und werden in der folgenden Beschreibung unter teilweise Bezugnahme auf die Figuren näher erläutert.

Vorzugsweise ist die Kontrolleinheit ferner ausgebildet, auf Basis des partiell abgedunkelten Durchlichtbildes auf potentielle Glaskanten von Deckgläsern zu detektieren, ferner auf Basis der potentiellen Glaskanten und auf Basis wenigstens einer Vorgabeinformation tatsächliche Glaskanten von Deckgläsern zu identifizieren sowie ferner auf Basis der tatsächlichen Glaskanten die Deckglasbereiche zu identifizieren.

Vorzugsweise ist die Spaltblende eine erste Spaltblende, wobei das partiell abgedunkelte Bild ein erstes partiell abgedunkeltes Bild ist, wobei die Vorrichtung ferner eine zwischen der flächigen Lichtquelle und dem Objektträger reversibel positionierbare zweite Spaltblende aufweist, welche mehrere Öffnungsspalte aufweist, wobei die Kontrolleinheit ferner ausgebildet ist, in einem vierten Betriebszustand die zweite Spaltblende derart anzusteuern, dass die zweite Spaltblende zwischen der flächigen Lichtquelle und dem Objektträger positioniert ist, und die flächige Lichtquelle zu aktivieren sowie mittels der Bilderfassungseinheit ein zweites partiell abgedunkeltes Durchlichtbild des Objektträgers zu erfassen sowie ferner auf Basis der partiell abgedunkelten Durchlichtbilder die jeweiligen räumlichen Lagen der jeweiligen Deckglasbereiche zu bestimmen.

Vorzugsweise weist die Vorrichtung ferner eine zwischen der flächigen Lichtquelle und dem Objektträger reversibel positionierbare dritte Spaltblende auf, welche mehrere Öffnungsspalte aufweist, wobei die Kontrolleinheit ferner ausgebildet ist, in einem fünften Betriebszustand die dritte Spaltblende derart anzusteuern, dass die dritte Spaltblende zwischen der flächigen Lichtquelle und dem Objektträger positioniert ist, und die flächige Lichtquelle zu aktivieren sowie mittels der Bilderfassungseinheit ein drittes partiell abgedunkeltes Durchlichtbild des Objektträgers zu erfassen sowie ferner auf Basis der partiell abgedunkelten Durchlichtbilder die jeweiligen räumlichen Lagen der jeweiligen Deckglasbereiche zu bestimmen.

Vorzugsweise ist in dem ersten Betriebszustand die reversibel positionierbare Spaltblende nicht zwischen der flächigen Lichtquelle und dem Objektträger positioniert.

Vorgeschlagen wird ferner ein erfindungsgemäßes Verfahren. Das erfindungsgemäße Verfahren zur Identifikation jeweiliger Deckglasbereiche jeweiliger Deckgläser mit jeweiligen Gewebeschnitten auf einem Objektträger, welcher mehrere optische Kennzeichnungen aufweist, weist unterschiedliche Schritte auf: Positionieren des Objektträgers zwischen einer flächigen Lichtquelle und einer Bilderfassungseinheit, Vorsehen einer reversibel positionierbaren Spaltblende, welche mehrere Öffnungsspalte aufweist, zwischen der flächigen Lichtquelle und dem Objektträger, Vorsehen einer Beleuchtungseinheit ausgebildet zum Beleuchten jener Oberfläche des Objektträgers, welche der Bilderfassungseinheit zugewandt ist, ferner in einem ersten Betriebszustand, Aktivieren der flächige Lichtquelle sowie Erfassen eines vollständig ausgeleuchteten Durchlichtbildes des Objektträgers mittels der Bilderfassungseinheit, ferner in einem zweiten Betriebszustand, Aktivieren der Beleuchtungseinheit sowie Erfassen eines Auflichtbildes des Objektträger mittels der Bilderfassungseinheit, ferner in einem dritten Betriebszustand, Ansteuern der Spaltblende derart, dass die Spaltblende zwischen der flächigen Lichtquelle und dem Objektträger positioniert ist, und ferner Aktivieren der flächigen Lichtquelle sowie Erfassen eines partiell abgedunkelten Durchlichtbildes des Objektträgers mittels der Bilderfassungseinheit, Zuordnen jeweiliger Gewebeschnitte zu jeweiligen optischen Kennzeichnungen auf Basis des vollständig ausgeleuchteten Durchlichtbildes, des Auflichtbildes und des partiell abgedunkelten Durchlichtbildes.

Erfindungsgemäß weist das Verfahren die Schritte auf: Bestimmen jeweiliger räumlicher Positionen jeweiliger optischer Kennzeichnungen auf Basis des Auflichtbildes, ferner Bestimmen jeweiliger räumlicher Lagen der jeweiligen Deckglasbereiche auf Basis des partiell abgedunkelten Durchlichtbildes, ferner Bestimmen jeweiliger räumlicher Lagen der jeweiligen Gewebeschnitte auf Basis des vollständig ausgeleuchteten Durchlichtbildes, sowie Zuordnen der jeweiligen Gewebeschnitte zu den jeweiligen optischen Kennzeichnungen auf Basis der jeweiligen räumlichen Positionen der jeweiligen optischen Kennzeichnungen, auf Basis der jeweiligen räumlichen Lagen der jeweiligen Deckglasbereiche und auf Basis der jeweiligen räumlichen Lagen der jeweiligen Gewebeschnitte.

Vorzugsweise weist das Verfahren die Schritte auf: Detektieren potentieller Glaskanten von Deckgläsern auf dem Objektträger auf Basis des partiell abgedunkelten Durchlichtbildes, Identifizieren tatsächlicher Glaskanten auf Basis auf Basis der potentiellen Glaskanten und auf Basis wenigstens einer Vorgabeinformation, sowie ferner Identifizieren der Deckglasbereiche auf Basis der tatsächlichen Glaskanten.

Vorzugsweise ist die Spaltblende eine erste Spaltblende, wobei das partiell abgedunkelte Bild ein erstes partiell abgedunkeltes Bild ist, wobei das Verfahren vorzugsweise ferner die Schritte aufweist: Vorsehen einer zwischen der flächigen Lichtquelle und dem Objektträger reversibel positionierbaren zweiten Spaltblende, welche mehrere Öffnungsspalte aufweist, sowie ferner, in einem vierten Betriebszustand, Ansteuern der zweiten Spaltblende derart, dass die zweite Spaltblende zwischen der flächigen Lichtquelle und dem Objektträger positioniert ist, und ferner Aktivieren der flächigen Lichtquell aktivieren sowie Erfassen eines zweiten partiell abgedunkelten Durchlichtbildes des Objektträgers mittels der Bilderfassungseinheit, sowie ferner Bestimmen der jeweiligen räumlichen Lagen der jeweiligen Deckglasbereiche auf Basis der partiell abgedunkelten Durchlichtbilder.

Vorgeschlagen wird ferner ein digitales Bildverarbeitungsverfahren zur Identifikation jeweiliger Deckglasbereiche jeweiliger Deckgläser mit jeweiligen Gewebeschnitten auf einem Objektträger, welcher mehrere optische Kennzeichnungen aufweist. Das digitale Bildverarbeitungsverfahren weist die Schritte auf: Bereitstellen eines vollständig ausgeleuchteten Durchlichtbildes des Objektträgers, Bereitstellen eines Auflichtbildes des Objektträgers, Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind, Bestimmen jeweiliger räumlicher Positionen (P1, P2, P3) jeweiliger optischer Kennzeichnungen (KE1, KE2, KE3) auf Basis des Auflichtbildes (AB), Bestimmen jeweiliger räumlicher Lagen der jeweiligen Deckglasbereiche (DGB) auf Basis des partiell abgedunkelten Durchlichtbildes (PDB3), Bestimmen jeweiliger räumlicher Lagen der jeweiligen Gewebeschnitte (GS, GS1, GS2, GS3) auf Basis des vollständig ausgeleuchteten Durchlichtbildes (PB), sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

Vorgeschlagen wird ferner ein computerimplementiertes Verfahren zur Identifikation jeweiliger Deckglasbereiche jeweiliger Deckgläser mit jeweiligen Gewebeschnitten auf einem Objektträger, welcher mehrere optische Kennzeichnungen aufweist, aufweisend die Schritte: Bereitstellen eines vollständig ausgeleuchteten Durchlichtbildes des Objektträgers, Bereitstellen eines Auflichtbildes des Objektträgers, Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind, Bestimmen jeweiliger räumlicher Positionen (P1, P2, P3) jeweiliger optischer Kennzeichnungen (KE1, KE2, KE3) auf Basis des Auflichtbildes (AB), Bestimmen jeweiliger räumlicher Lagen der jeweiligen Deckglasbereiche (DGB) auf Basis des partiell abgedunkelten Durchlichtbildes (PDB3), Bestimmen jeweiliger räumlicher Lagen der jeweiligen Gewebeschnitte (GS, GS1, GS2, GS3) auf Basis des vollständig ausgeleuchteten Durchlichtbildes (PB), sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

Vorgeschlagen wird ferner ein Computerprogrammprodukt, umfassend Befehle, die bei der Ausführung des Programms durch einen Computer diesen veranlassen, das computerimplementierte Verfahren auszuführen.

Vorgeschlagen wird ferner eine Recheneinheit zur Identifikation jeweiliger Deckglasbereiche jeweiliger Deckgläser mit jeweiligen Gewebeschnitten auf einem Objektträger, welcher mehrere optische Kennzeichnungen aufweist. Die Recheneinheit ist ausgebildet zum: Bereitstellen eines vollständig ausgeleuchteten Durchlichtbildes des Objektträgers, Bereitstellen eines Auflichtbildes des Objektträgers, Bereitstellen eines partiell abgedunkelten Durchlichtbildes des Objektträgers sowie Zuordnen jeweiliger Gewebeschnitte zu jeweiligen optischen Kennzeichnungen auf Basis des vollständig ausgeleuchteten Durchlichtbildes, des Auflichtbildes sowie Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind, Bestimmen jeweiliger räumlicher Positionen (P1, P2, P3) jeweiliger optischer Kennzeichnungen (KE1, KE2, KE3) auf Basis des Auflichtbildes (AB), Bestimmen jeweiliger räumlicher Lagen der jeweiligen Deckglasbereiche (DGB) auf Basis des partiell abgedunkelten Durchlichtbildes (PDB3), Bestimmen jeweiliger räumlicher Lagen der jeweiligen Gewebeschnitte (GS, GS1, GS2, GS3) auf Basis des vollständig ausgeleuchteten Durchlichtbildes (PB), sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

Im Folgenden wird die Erfindung anhand spezieller Ausführungsformen ohne Beschränkung des allgemeinen Erfindungsgedankens anhand der Figuren näher erläutert. Dabei zeigen:
Figur 1 einen prinzipiellen Aufbau eines Objektträgers mit Deckgläsern und Gewebeschnitten,
Figur 2 ein Auflichtbild eines Objektträgers,
Figur 3a ein Durchlichtbild eines Objektträgers,
Figur 3b ein weiteres Auflichtbild eines Objektträgers mit jeweiligen erkannten räumlichen Positionen jeweiliger optischer Kennzeichnungen,
Figur 4 eine bevorzugte Ausführungsform der erfindungsgemäßen Vorrichtung,
Figur 5 eine weitere bevorzugte Ausführungsform der erfindungsgemäßen Vorrichtung,
Figur 6 ein erstes, beispielhaftes partielles Durchlichtbild eines Objektträgers,
Figur 7a einen Verlauf von Lichtstrahlen bei der Erfassung eines partiellen Durchlichtbildes eines Objektträgers,
Figur 7b eine schematische, beispielhafte Darstellung eines partiellen Durchlichtbildes eines Objektträgers,
Figur 8a ein beispielhaftes Durchlichtbild eines Objektträgers,
Figur 8b ein Histogramm transformierter Parameter des Durchlichtbildes aus Figur 8a,
Figur 8c eine Binärmaske des Durchlichtbildes aus Figur 8a,
Figur 8d das Durchlichtbild aus Figur 8a mit detektierten jeweiligen räumlichen Lagen der jeweiligen Gewebeschnitte,
Figur 9a ein weiteres, beispielhaftes partielles Durchlichtbild,
Figur 9b abgeleitete Bildinformation aus dem partiellen Durchlichtbild aus Figur 9a,
Figur 9c sowie 9d weitere abgeleitete Bildinformationen aus dem partiellen Durchlichtbild aus Figur 9a,
Figur 10a das beispielhafte partielle Durchlichtbild aus Figur 9a,
Figur 10b aus dem partiellen Durchlichtbild aus Figur 10a extrahierte Bildinformationen,
Figur 10c abgeleitete Bildinformationen aus mehreren partiellen Durchlichtbildern,
Figur 11a unterschiedliche partielle Durchlichtbilder eines gleichen Objektträgers,
Figur 11b eine zusammengeführte Bildinformation aus den mehreren partiellen Durchlichtbildern aus Figur 11a,
Figur 12b die zusammengeführte Bildinformation aus Figur 11b sowie sich ergebende Intensitätsdichtewerte,
Figur 13a Schritte zur Identifikation von Glaskanten sowie zur Identifikation von Deckglasbereichen,
Figur 13b beispielhafte Illustrationen detektierter Deckglasbereiche,
Figur 14a nochmals die abgeleitete Bildinformationen aus Figur 10,
Figur 14b ein Detektionsergebnis von Deckglasbereichen für die Bildinformation aus Figur 14a,
Figur 15 Schritte einer bevorzugten Ausführungsform des erfindungsgemäßen Verfahrens,
Figur 16 bevorzugte Schritte zur Identifikation von Deckglasbereichen,
Figur 17 bevorzugte Schritte zur Identifikation von Glaskanten auf Basis mehrerer partiell abgedunkelter Durchlichtbilder,
Figur 18 einen beispielhaften Objektträger, bei welchem jeweilige Gewebeschnitte jeweiliger Deckglasbereiche einer einzelnen optischen Kennzeichnung zuzuordnen sind.

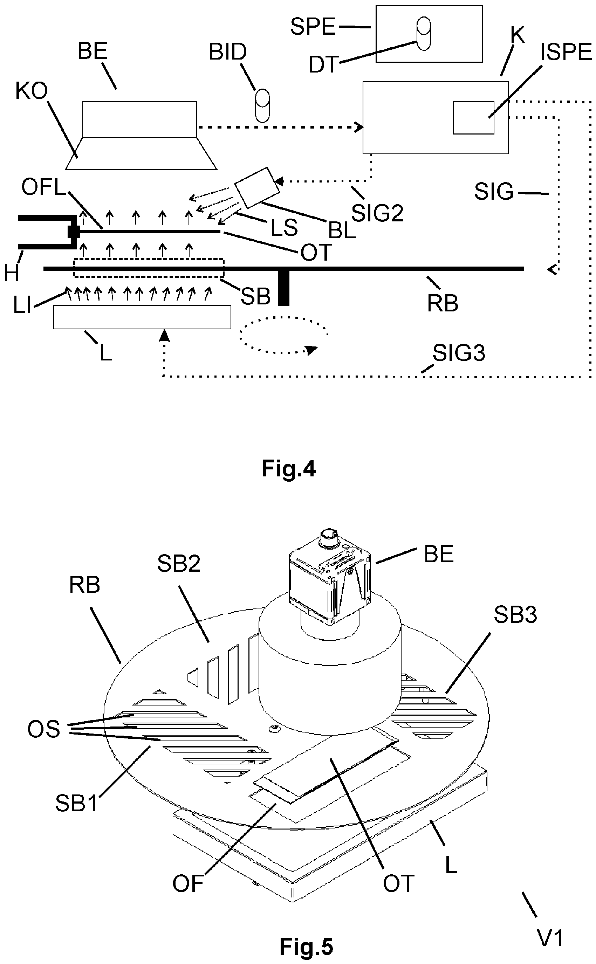

Die Figur 4 zeigt eine bevorzugte Ausführungsform der erfindungsgemäßen Vorrichtung V. Die Vorrichtung V weist eine flächige Lichtquelle L auf, welche Licht LI emittiert. Ferner weist die Vorrichtung V eine Bilderfassungseinheit BE auf, welche vorzugsweise eine Kamera ist, welche als integralen Bestandteil vorzugsweise ein Kameraobjektiv KO aufweist.

Die Vorrichtung V weist ferner eine Halterungseinheit H zum Positionieren eines Objektträgers OT zwischen der Flächenlichtquelle L und der Bilderfassungseinheit BE auf.

Die Vorrichtung V weist ferner eine Spaltblende SB auf, vorzugsweise in Form einer rotierbaren Blende RB, welche reversibel positionierbar zwischen der Flächenlichtquelle L und dem Objektträger OT ist.

Die Figur 5 zeigt eine weitere bevorzugte Ausführungsform der Vorrichtung V1 aus einem perspektivischen Sichtwinkel. Eine rotierbare Blende RB weist wenigstens eine Spaltblende SB1 mit mehreren Öffnungsspalten OS. Die Öffnungsspalten OS verlaufen vorzugsweise parallel zueinander. Durch Rotieren der Blende RB in eine Position, in welcher sich die Spaltblende SB1 zwischen der Lichtquelle L und dem Trägerglas OT befindet, kann der in der Figur 4 dargestellte Betriebszustand erreicht werden, sodass Licht LI von der Lichtquelle L durch die Spaltblende SB hindurch auf den Objektträger OT trifft und die Bilderfassungseinheit BE ein partiell abgedunkeltes Durchlichtbild des Objektträgers OT erfassen kann.

Die Vorrichtung V weist gemäß Figur 4 ferner eine Kontrolleinheit K auf. Die Kontrolleinheit K kann Bilddaten BID von der Bilderfassungseinheit BE entgegennehmen. Vorzugsweise weist die Vorrichtung V eine Speichereinheit SPE zur Abspeicherung von Daten DT auf. Vorzugsweise verwendet die Kontrolleinheit K die Speichereinheit SPE zur Abspeicherung der Bilddaten BID. Vorzugsweise weist die Kontrolleinheit K einen internen Speicher ISPE auf.

Über ein Steuersignal SIG steuert die Kontrolleinheit K die rotierbare Blende RB bzw. die Spaltblende SB an, um diese in unterschiedlichen Betriebszuständen unterschiedlich zu positionieren.

Die Beleuchtungseinheit BL aus der Figur 4 kann Lichtstrahlung LS auf jene Oberfläche OFL des Objektträgers OT richten, welche der Bilderfassungseinheit BE zugewandt ist. Ist die Beleuchtungseinheit BL eingeschaltet, so kann dann durch die Lichtstrahlung LS die Oberfläche OFL des Objektträgers OT beleuchtet werden und dann mittels der Bilderfassungseinheit BE ein Auflichtbild des Objektträgers erfasst werden.

Die Kontrolleinheit K steuert die Beleuchtungseinheit BL über ein Steuersignal SIG2 an. Die Die Kontrolleinheit K steuert die Lichtquelle L über ein Steuersignal SIG3 an.

Die Kontrolleinheit K steuert in einem ersten Betriebszustand die flächige Lichtquelle L an, um diese zu aktivieren, und erfasst ferner mittels der Bilderfassungseinheit BE ein vollständig ausgeleuchtetes Durchlichtbild des Objektträgers OT. Ein solches vollständig ausgeleuchtetes Durchlichtbild ist beispielhaft in der Figur 3a gezeigt. Im Sinne dieser Anmeldung ist ein vollständiges Durchlichtbild ein Durchlichtbild, bei welchem alle auf einem Objektträger gegebenen Gewebeschnitte vollständig durch die Lichtquelle L ausgeleuchtet sind. Im Sinne dieser Anmeldung ist ein vollständiges Durchlichtbild insbesondere ein Durchlichtbild, bei welchem alle auf einem Objektträger gegebenen Gewebeschnitte vollständig durch die Lichtquelle L ausgeleuchtet sind und bei welchem alle Deckglasbereiche, welche Gewebeschnitte aufweisen, vollständig durchleuchtet und nicht durch eine Blende abgedunkelt sind.

In dem ersten Betriebszustand kann beispielsweise die rotierbare Blende RB der Vorrichtung V1 aus der Figur 5 in einer solchen Position sein, dass eine vollständige, großflächige Öffnung OF sich unterhalb des Objektträgers OT befindet, so dass alle Deckglasbereiche, welche Gewebeschnitte aufweisen, vollständig durchleuchtet und nicht durch eine Blende oder abgedunkelt sind.

Die Vorrichtung V1 weist vorzugsweise eine rotierbare Blende RB auf, welche eine erste Spaltblende SB1, eine zweite Spaltblende SB 2, eine dritte Spaltblende SB 3 sowie eine Öffnung OF aufweist.

In einem zweiten Betriebszustand steuert also die Kontrolleinheit K dann die Beleuchtungseinheit BE an um diese zu aktivieren und erfasst ferner mittels der Bilderfassungseinheit BE ein Auflichtbild des Objektträgers OT.

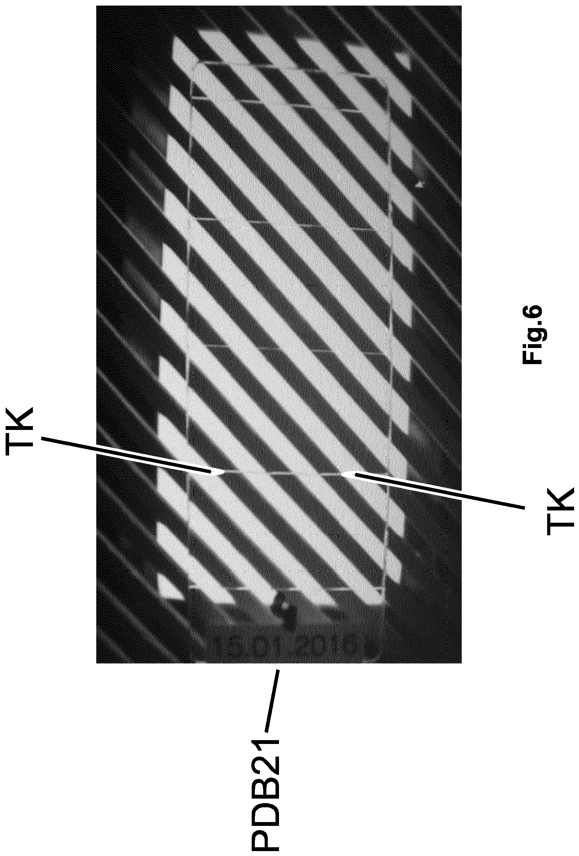

In einem dritten Betriebszustand steuert die Kontrolleinheit K die Spaltblende SB1 bzw. die rotierbare Blende RB so an, dass die Spaltblende SB1 zwischen der flächigen Lichtquelle L und dem Objektträger OT positioniert ist. Es kann also die rotierbare Blende RB aus der Figur 5 so rotiert werden, dass die Spaltblende SB1 zwischen der Lichtquelle L und dem Objektträger OT positioniert ist. In dem dritten Betriebszustand erfasst die Kontrolleinheit K ferner mittels der Bilderfassungseinheit BE und bei aktivierter Lichtquelle L ein partiell abgedunkeltes Durchlichtbild das Objektträgers OT. Ein solches partiell abgedunkeltes Durchlichtbild ist beispielhaft als das Bild PDB21 in der Figur 6 dargestellt. Im Sinne dieser Anmeldung ist ein partiell abgedunkeltes Durchlichtbild ein Durchlichtbild, bei welchen Teilbereiche der Gewebeschnitte und auch Teilbereiche von Glaskanten der Deckglasbereiche durch eine Spaltblende bzw. die Spaltblende SB1 gegenüber der Lichtquelle L abgeschattet bzw. abgedunkelt sind. Ferner sind bei einem partiell abgedunkelten Durchlichtbild andere Teilbereiche der Gewebeschnitte und der Glaskanten der Deckglasbereiche nicht durch eine Spaltblende bzw. die Spaltblende SB1 gegenüber der Lichtquelle L abgeschattet bzw. abgedunkelt.

Die Kontrolleinheit K bestimmt auf Basis des Auflichtbildes jeweilige räumliche Positionen jeweiliger optischer Kennzeichnungen. Ferner bestimmt die Kontrolleinheit K auf Basis des partiell abgedunkelten Durchlichtbildes jeweilige räumliche Lagen der jeweiligen Deckglasbereiche. Ferner bestimmt die Kontrolleinheit K auf Basis des vollständig ausgeleuchteten Durchlichtbildes jeweilige räumliche Lagen der jeweiligen Gewebeschnitte. Schließlich ordnet die Kontrolleinheit K den jeweiligen Gewebeschnitte jeweiligen der optischen Kennzeichnungen zu. Es werden also die zuvor bestimmten Deckglasbereiche verwendet, um die jeweiligen Gewebeschnitte den jeweiligen Kennzeichnungen zuzuordnen.

Um einen oder mehrere Vorteile der erfindungsgemäßen Vorrichtung im Detail näher zu erläutern werden nun genauere Ausführungen gemacht.

Das Auflichtbild AB aus der Figur 2 ist geeignet, die optischen Kennzeichnungen KE hinreichend wiederzugeben, so dass diese auf Basis des Auflichtbildes AB detektiert werden können bzw. so dass jeweilige räumliche Positionen der jeweiligen optischen Kennzeichnung KE bestimmt werden können. Hierzu zeigt die Figur 3b ein Auflichtbild AB2 für den Objektträger OT durch die Kontrolleinheit jeweilige bestimmte räumliche Positionen P1, P2, P3, jeweils als dunkle Rechtecke in Figur 3b dargestellt, der jeweiligen Kennzeichnungen KE1, KE2, KE3. Ein vollständiges oder partiell abgedunkeltes Durchlichtbild ist nicht geeignet, die die optischen Kennzeichnungen KE hinreichend wiederzugeben.

Solche Positionen P1, P2, P3 können durch gängige Bildverarbeitungsalgorithmen robust und performant in dem Auflichtbild AB aufgefunden bzw. bestimmt werden. Eine solche Position P1, P2, P3 wird dann beispielsweise durch eine sogenannte Bounding Box gekennzeichnet. Algorithmen zur Detektion entsprechender optischer Kennzeichnungen KE1, KE2, KE3 finden sich beispielsweise in den Bibliotheken MVTecs Halcon oder OpenCV. Vorzugsweise bestimmt die Kontrolleinheit K aus dem Auflichtbild unter Verwendung der zuvor bestimmten räumlichen Position der jeweiligen optischen Kennzeichnung auch entsprechende Daten aus den Kennzeichnungen KE, um diese den entsprechenden Gewebeschnitten zuzuordnen.

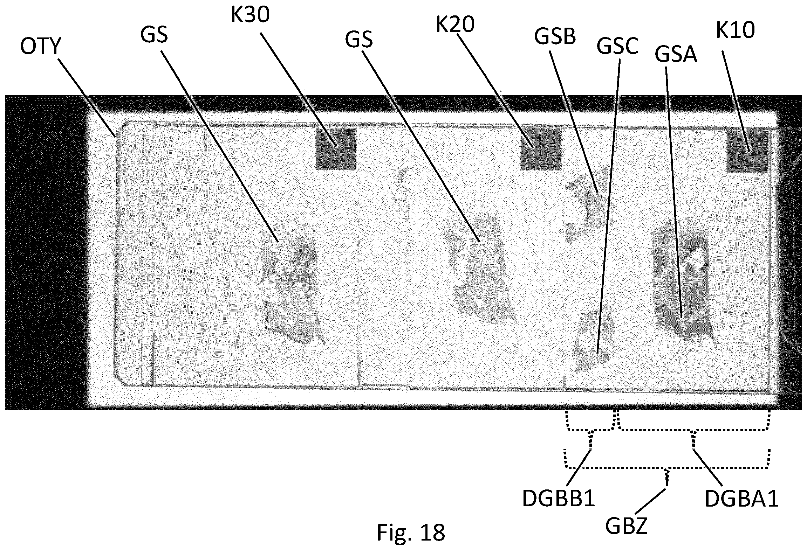

Wie zuvor erläutert, besteht die Aufgabe darin, einen jeweiligen Gewebeschnitt GS1, GS2, GS3 einer jeweiligen Kennzeichnung KE1, KE2, KE3 zuzuordnen. Eine Kennzeichnung KE1, KE2, KE3 befindet sich immer auf einem entsprechenden Deckglasbereich DB1, DB2, DB3, wobei nicht unbedingt jeder Deckglasbereich eine Kennzeichnung aufweisen muss, wie später unter Bezug auf Figur 18 noch genauer erläutert. Es muss also nicht jeder Deckglasbereich DB1, DB2, DB3 unbedingt eine eigene Kennzeichnung K1, KE2, KE3 aufweisen, es kann stattdessen auch ein Deckglas keine Kennzeichnung aufweisen aber der entsprechende Gewebeschnitt einer Kennzeichnung eines anderen Deckglases zuzuordnen sein, wie später noch in Bezug auf Figur 18 näher erläutert.

Es müssen im Zuge der Bildverarbeitung die Deckgläser bzw. Deckglasbereiche DB1, DB2, DB3 jeweils voneinander abgegrenzt werden, um aufgrund der jeweiligen räumlichen Lage einer optischen Kennzeichnung KE1 und einer Darstellung eines Gewebeschnittes GS1 diese einander zuordnen zu können. Wie zuvor dargelegt, ist eine Detektion von Glaskanten GK auf Basis des Auflichtbildes AB aus der Figur 2 schwierig und gegebenenfalls fehlerbehaftet.

Die Figur 3a zeigt ein beispielhaftes vollständig ausgeleuchtetes Durchlichtbild DB eines Objektträgers OT. Während zwar die Gewebeschnitte GS gut erkennbar sind, so ist jedoch eine Detektion der Glaskanten und somit auch eine Bestimmung der jeweiligen räumlichen Lagen der jeweiligen Deckglasbereiche auf Basis des Durchlichtbildes DB schwierig und ggf. fehlerbehaftet.

Ein wesentlicher Aspekt der Erfindung besteht darin, dass mittels der Bilderfassungseinheit BE mindestens ein partiell abgedunkeltes Durchlichtbild unter Verwendung der Spaltblende SB1 mit den mehreren Öffnungsspalten OS erfasst wird und dass auf Basis des partiell abgedunkelten Durchlichtbildes die jeweiligen räumlichen Lagen der jeweiligen Deckglasbereiche bestimmt werden. Ferner ist es aber erfindungsgemäß ebenfalls vorgesehen, zur Erfassung der Gewebeschnitte GS ein vollständig ausgeleuchtetes Durchlichtbild DB aus der Figur 3a zur Verfügung zu haben, da nur dann die genauen Ausprägungen der Gewebeschnitte GS sichtbar werden. Ebenso ist es erfindungsgemäß vorgesehen, ein Auflichtbild AB wie aus der Figur 2 zur Verfügung zu haben, um eben die räumlichen Positionen der optischen Kennzeichnung bestimmen zu können und auch die Kennzeichnungen KE auslesen zu können. Dadurch, dass die Vorrichtung V, V1 die jeweiligen Gewebeschnitte den jeweiligen optischen Kennzeichnungen auf Basis der drei unterschiedlichen Bilder zuordnet, erfolgt diese Zuordnung besonders robust und zuverlässig.

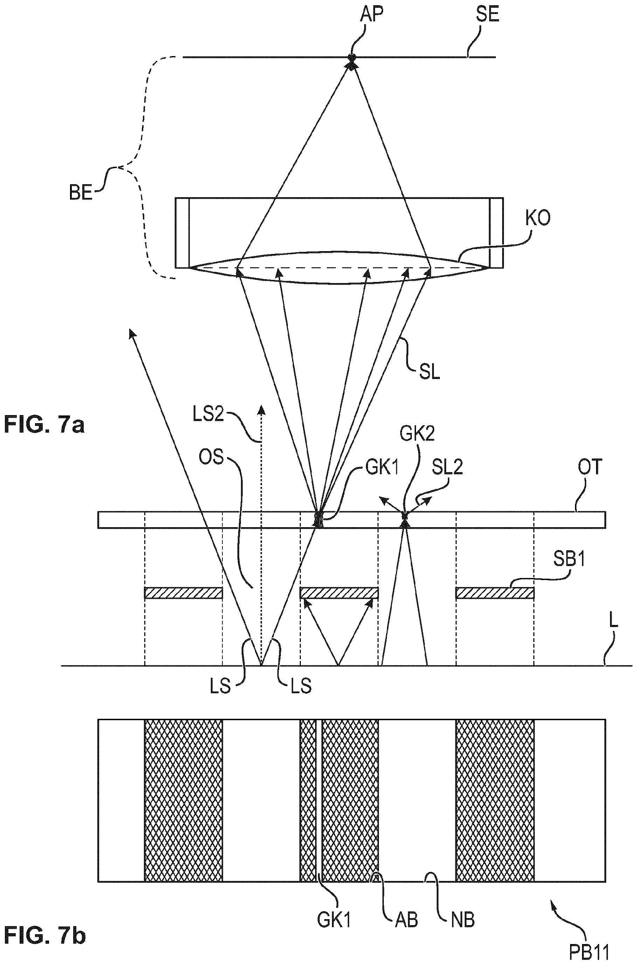

Die grundlegenden physikalischen Effekte, welche im Zuge der Erfassung des partiell abgedunkelten Durchlichtbildes zum Tragen kommen, sind in der Figur 7a genauer erläutert.

Die Figur 7a zeigt in einer Seitenansicht die Lichtquelle L sowie die Spaltblende SB1 als auch den Objektträger OT. Lichtstrahlen LS von der Lichtquelle L treten durch einen oder mehrere Öffnungsspalte OS hindurch zum Objektträger OT. Treffen Lichtstrahlen auf eine Glaskante GK1, so wird entsprechendes Licht LS an der Glaskante GK1 gestreut und als Streulicht SL divergierend hin zur Bilderfassungseinheit BE bzw. dem Objektiv KO hingestreut. Ein Lichtstrahl LS2, welcher nicht auf eine Glaskante trifft, wird durch den Objektträger OT hindurch transmittiert. Das Streulicht SL wird dann durch das Kameraobjektiv KO auf einen Abbildungspunkt AP eines Sensors SE der Bilderfassungseinheit BE hin abgebildet.

Die Figur 7b zeigt hierzu in einer Aufsicht beispielhaft eine Darstellung einer beispielhaften-Schemazeichnung eines partiell abgedunkelten Durchlichtbildes PB11 eines Objektträgers in dem Fall, dass die Öffnungsspalte der Spaltblende parallel zu der Glaskante GK1 verläuft.

Der an sich abgedunkelte Bereich AB in dem partiellen Durchlichtbild PB11 weist aufgrund des Streulichteffektes aus der Figur 7a eine hell erscheinende Glaskante GK1 auf. Die Glaskante GK1 ist deshalb in dem Bild PB11 sichtbar, da sich das Streulicht SL, welches auf dem Abbildungspunkt AP des Sensors SE abgebildet wird, in seiner Gesamtintensität in dem Bild PB11 von der Signalintensität des restlichen Hintergrundbereiches des Abbildungsbereiches AB hervorhebt. Mit anderen Worten: die Signalstärke des Streulichtes SL ist hoch genug gegenüber der Signalstärke der weiteren Bereiche des abgedunkelten Bereiches AB.

Für eine Glaskante GK2, welche sich in einem nicht abgedunkelten Bereich NB befindet, gibt es zwar ebenfalls einen Streulichteffekt. Jedoch ist die sich ergebende Signalstärke für eine entsprechende Glaskante GK2 nicht deutlich höher als die Signalstärke des nicht abgedunkelten Bereiches NB in anderen Regionen. Daher wird eine sprechende Glaskante in dem nicht abgedunkelten Bereich NB nicht gut sichtbar.

Ein entsprechender Effekt ist in der Figur 6 erkennbar, da bei dem partiell abgedunkelten Durchlichtbild PDB21 eine Glaskante nur in Teilkantenbereichen TK jeweils in abgedunkelten Bereichen sichtbar wird.

Das Bild PDB21 wurde erfasst in einer Konfiguration, in welcher die Öffnungsspalte der Spaltblende gegenüber den Glaskanten des Objektträgers einen Winkel von ungefähr 45° aufweisen. Diese Konfiguration ist für rein horizontal verlaufende, rein vertikal verlaufende Glaskanten oder Kombinationen daraus vorteilhaft, da dann die Wahrscheinlichkeit, dass ein abgedunkelter Bereich eine Glaskante trifft, höher ist als in einer Konfiguration, bei welcher die Öffnungsspalten parallel zu den Glaskanten verlaufen. Dies war zuvor der Fall in der Darstellung der Figur 7a und 7b. Dadurch, dass die Spaltblende SB1, siehe Figur 5, mehrere parallel zueinander verlaufende Öffnungsspalte aufweist, ist die Wahrscheinlichkeit, für mehrere Glaskanten jeweils wenigstens eine Darstellung einer Teilglaskante TK, siehe Figur 6, in einem partiell abgedunkelten Durchlichtbild zu generieren, als bei Vorsehen nur eines Öffnungsspaltes.

Es wird im Späteren genauer erläutert, auf welche Weise auf Basis eines partiell abgedunkelten Durchlichtbildes PB21 jeweilige räumliche Lagen der jeweiligen Deckglasbereiche bestimmt werden können.

Zunächst erfolgt jedoch eine detaillierte Erläuterung, wie auf Basis eines vollständig ausgeleuchteten Durchlichtbildes des Objektträgers jeweilige räumliche Lagen der jeweiligen Gewebeschnitte bestimmt werden können.

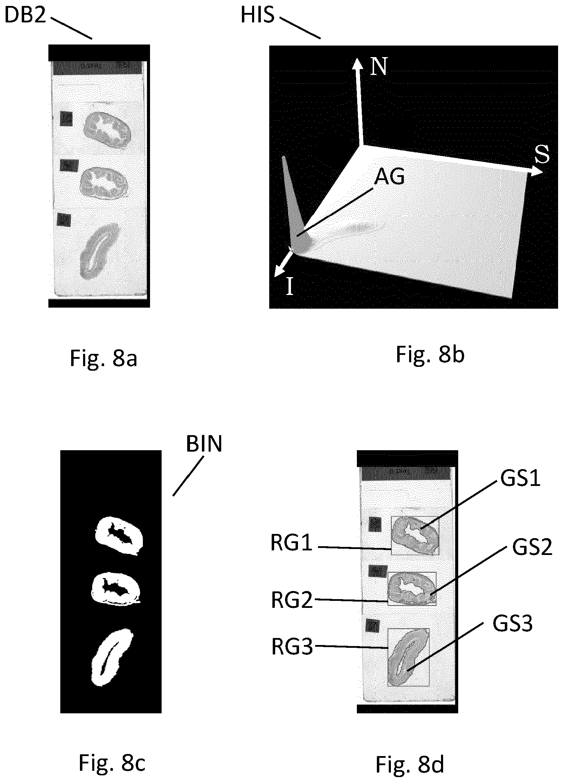

Figur 8a zeigt hierzu ein Durchlichtbild DB2. Ein derartiges Bild DB2 kann in einem RGB-Farbraum (rot, grün, blau) erfasst werden. Es können dann die RGB-Werte mittels einer Transformation in einen HSV-Parameterraum mit den Werten Hue, Saturation und Intensity (H, S, I) transformiert werden. Hierzu zeigt dann für die Parameter Saturation und Intensity die Figur 8b ein Histogramm HIS des Durchlichtbildes DB2. Der Aggregationsbereich AG besonders hoher Werte repräsentiert hierbei den hellen bzw. weißen Hintergrund. Auf Basis des Histogramms HIS sowie des Aggregationsbereiches AG kann dann ein Schwellenwert bezogen auf Intensitätswerte ermittelt werden. Auf Basis eines solchen Schwellenwertes kann dann einem jeden Bildpixel abhängig von seinem individuellen Intensitätswert ein Binärwert von 0 oder 1 zugeordnet werden, sodass sich eine Binärmaske BIN wie aus der Figur 8c ergibt. Eine solche Binärinformation bzw. Binärmaske BIN kann dann durch übliche Bildverarbeitungsalgorithmen verwendet werden, um für das Durchlichtbild DB2, wie in der Figur 8d dargelegt, jeweilige räumliche Lagen RG1, RG2 RG3 der jeweiligen Gewebeschnitte GS1, GS2, GS3 zu bestimmen, in diesem Fall vorzugsweise als eine Bounding Box.

Im Weiteren folgen genaue Erläuterungen zur Bestimmung jeweiliger räumlicher Lagen der jeweiligen Deckglasbereiche bzw. jeweiliger Deckgläser auf Basis eines oder mehrerer partiell abgedunkelter Durchlichtbilder.

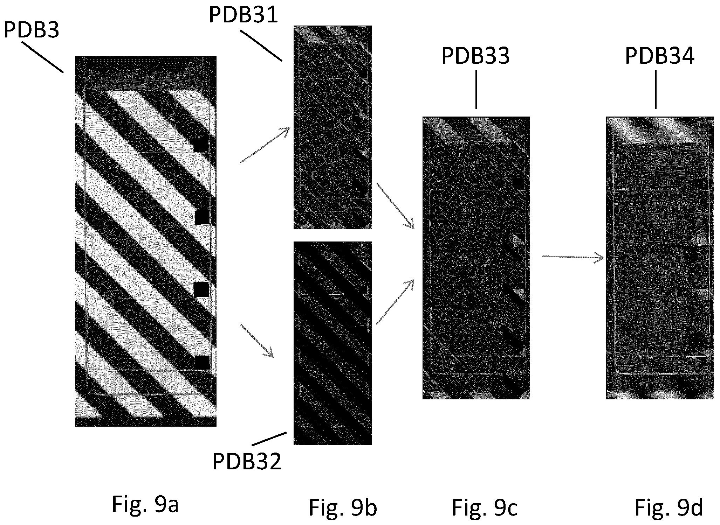

Die Figur 9a zeigt hierzu ein partiell abgedunkeltes Durchlichtbild PDB3. Aus dem Bild PDB3 lässt sich eine Bildinformation PDB32 extrahieren, welche die Bildinformation aus den partiell abgedunkelten Bereichen repräsentiert. Es lässt sich ferner vorzugsweise eine Bildinformation PDB31 ebenfalls aus dem Bild PDB3 extrahieren, siehe Figur 9b. Die Bildinformation PDB31 repräsentiert die Bildinformation der nicht partiell abgedunkelten Bereiche, wobei die Helligkeitswerte in der Information PDB31 invertiert wurden.

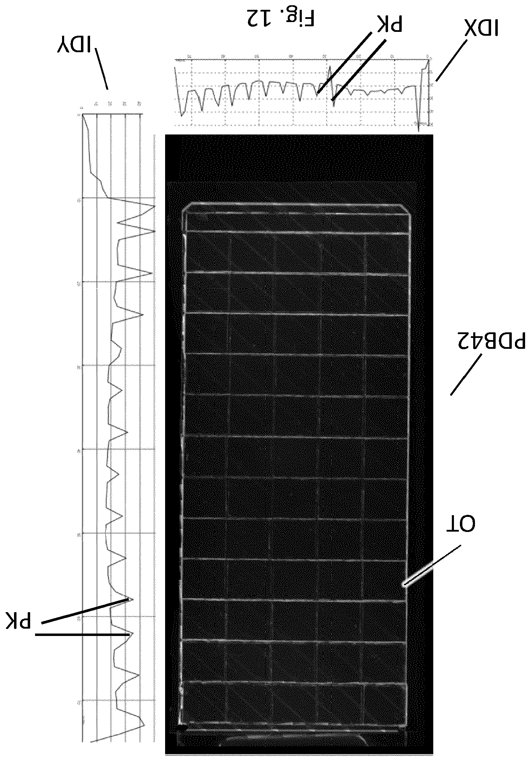

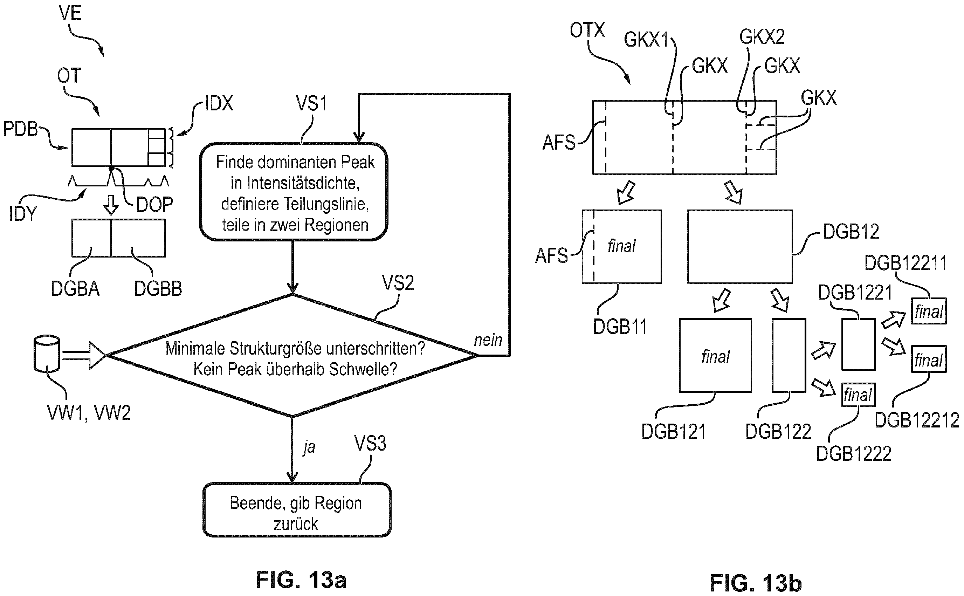

Die Bildinformation PDB33 aus der Figur 9c repräsentiert eine Superposition der Bildinformationen PDB31 und PDB32 aus der Figur 9b. Die Figur 9d zeigt eine Bildinformation PDB34, bei welcher mittels einer Fast-Fourier-Transformation zur Unterdrückung von Signalen in einer bestimmten Richtung, vorzugsweise 45°, eine Präsenz von Glaskanten in horizontaler Richtung verstärkt wurden. Eine solche Bildinformation PDB34 kann dann im Weiteren verwendet werden, um jeweilige räumliche Lagen von jeweiligen Deckglasbereichen zu detektieren, wie später noch im Genaueren unter Bezug auf die Figuren 12, 13a, 13b erläutert wird.

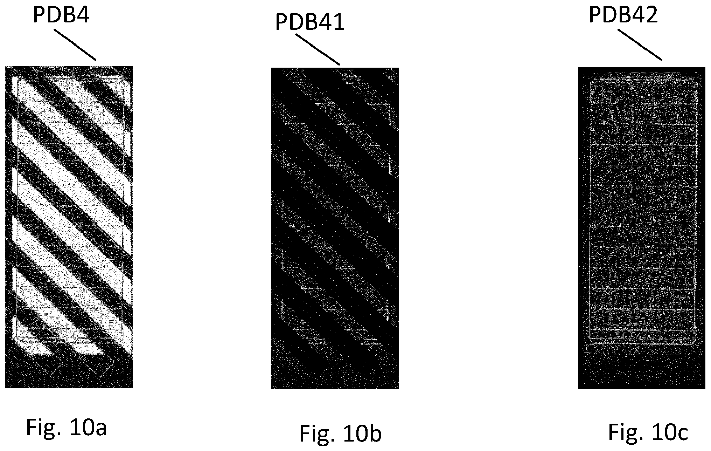

Die Figur 10a zeigt ein partiell abgedunkeltes Durchlichtbild PDB4, für welches eine entsprechende Bildinformation PDB41 in Figur 10b eine Bildinformationen aus den abgedunkelten Bereichen repräsentiert. Werden nun weitere partiell abgedunkelte Durchlichtbilder mittels mehrerer Spaltblenden SB1, SP2, SP3 aus der Figur 5 erfasst, und ergibt sich im Wesentlichen eine vollständige Abdeckung der gesamten Fläche des Objektträgers mittels der Gesamtheit partiellen abgedunkelten Durchlichtbilder, so kann dann eine gesamte Bildinformation PB42, wie in der Figur 10c dargestellt, gewonnen werden. Die Bilderinformation PB42 repräsentiert eine Überlagerung der Bildinformationen der jeweiligen abgedunkelten Bereiche der jeweiligen partiell abgedunkelten Durchlichtbilder, welche anhand unterschiedlicher Spaltblenden gewonnen wurden.

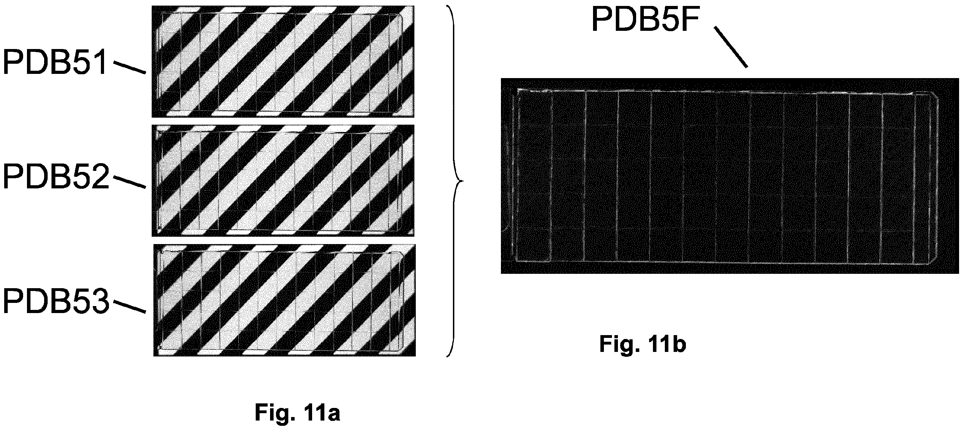

Hierzu zeigt Figur 11a ein weiteres Beispiel jeweiliger partiell abgedunkelter Durchlichtbilder PDB51, PDB52, PDB53, deren jeweilige Bildinformationen für die jeweiligen abgedunkelten Bereiche superponiert werden können, um eine finale Bildinformation PDB5F aus der Figur 11b zu gewinnen. Eine solche Bildinformation PDB5F oder aber eine Bildinformation PDB42 kann dann im Weiteren alternativ zu der Bildinformation PDB34 verwendet werden, um die jeweiligen räumlichen Lagen der jeweiligen Deckglasbereiche zu bestimmen.

Die Verwendung mehrerer partiell abgedunkelter Durchlichtbilder zur Bestimmung der jeweiligen räumlichen Lagen der jeweiligen Deckglasbereiche ist besonders vorteilhaft, da hierbei die sich ergebende Bildinformation PDB42, PDB5F eine stärkere Signatur der Signale von Glaskanten zeigt als bei einer Verwendung nur eines partiell abgedunkelten Durchlichtbildes PDB3 zur Gewinnung einer entsprechenden Bildinformation PDB34. Die mehreren Spaltblenden SB1, SB2, SB3 (siehe Figur 5) weisen vorzugsweise jeweils mehrere parallel zueinander verlaufende Öffnungsspalte auf, wobei ferner die Öffnungsspalte der Spaltblenden SB1, SB2, SB3 nicht deckungsgleich zueinander sondern zueinander versetzt sind. Dadurch, dass die mehreren Spaltblenden SB1, SB2, SB3 (siehe Figur 5) jeweils mehrere parallel zueinander verlaufende Öffnungsspalte aufweisen, und dass ferner die Öffnungsspalte der Spaltblenden SB1, SB2, SB3 nicht deckungsgleich sondern zueinander versetzt sind, ist die Wahrscheinlichkeit, für die mehreren Glaskanten eine hinreichende Anzahl an Darstellungen von Teilglaskanten TK, siehe Figur 6, insgesamt in den partiell abgedunkelten Durchlichtbildern PDB51, PDB52, PDB53, zu generieren, so dass in einer finalen Bildinformation PDB5F (siehe Figur 11b) basierend auf den mehreren den partiell abgedunkelten Durchlichtbildern PDB51, PDB52, PDB53 eine Präsenz der Glaskanten und somit eine Identifikation der Deckglasbereiche hinreichend robust und zuverlässig erfolgen kann.

Die Vorrichtung aus Figur 5 weist, wie zuvor beschrieben, vorzugsweise eine rotierbare Blende RB auf, welche eine erste Spaltblende SB1, eine zweite Spaltblende SB 2, eine dritte Spaltblende SB 3 sowie eine Öffnung OF aufweist. Diese ist insbesondere dann vorteilhaft, wenn das vollständig ausgeleuchtete Durchlichtbild, das Auflichtbild und die mehreren, vorzugsweise drei, partiell ausgeleuchteten Durchlichtbilder mittels ein und derselben Bilderfassungseinheit BE erfasst werden. Es muss dann nämlich der Objektträger OT nur ein einziges Mal in die Halterung H (siehe Figur 4) eingelegt werden. Es kann dann nämlich mittels Rotation der rotierbaren Blende in besonders einfacher und robuster Weise jeweils ein jeweiliger Betriebszustand herbeigeführt werden, in welchem das vollständig ausgeleuchtete Durchlichtbild, das Auflichtbild und die mehreren, vorzugsweise drei, partiell ausgeleuchteten Durchlichtbilder erfastt werden. Hierzu ist es eben nicht erforderlich, dass der Objektträger OT bewegt wird. Das Auflichtbild kann in iner Konfiguration bzw. einem Betriebszustand erfasst werden, in welcher irgendeine der Blenden SB1, SB2, SB3 oder der Öffnung OF zwischen der Lichtquelle L und dem Objektträger positioniert ist.

Vorzugsweise ist in dem ersten Betriebszustand die rotierbare Blende RB so konfiguriert, dass die Öffnung OF sich zwischen der flächigen Lichtquelle L und dem Objektträger OT befindet. Es wird dann in dem ersten Betriebszustand das vollständig ausgeleuchtete Durchlichtbild von der Bilderfassungseinheit erfasst.

Vorzugsweise ist in dem dritten Betriebszustand die rotierbare Blende RB so konfiguriert, dass die erste Spaltblende SB1 sich zwischen der flächigen Lichtquelle L und dem Objektträger OT befindet. Es wird dann in dem dritten Betriebszustand das erste partielle Durchlichtbild von der Bilderfassungseinheit erfasst.

Vorzugsweise ist in dem vierten Betriebszustand die rotierbare Blende RB so konfiguriert, dass die zweite Spaltblende SB2 sich zwischen der flächigen Lichtquelle Lund dem Objektträger OT befindet. Es wird dann in dem vierten Betriebszustand das zweite partielle Durchlichtbild von der Bilderfassungseinheit erfasst.

Vorzugsweise ist in dem fünften Betriebszustand die rotierbare Blende RB so konfiguriert, dass die dritte Spaltblende SB3 sich zwischen der flächigen Lichtquelle Lund dem Objektträger OT befindet. Es wird dann in dem fünften Betriebszustand das dritte partielle Durchlichtbild von der Bilderfassungseinheit erfasst.

Die Figur 12 zeigt für die Bildinformation PDB42 aus der Figur 10c ermittelte Werte IDX, IDY von Intensitätsdichten ID. Entlang von Geraden in X-Richtung wurden Intensitäten aufsummiert und dann mittels der Längen der Geraden normiert, sodass sich Intensitätsdichten ID ergeben wie als Werte IDX dargestellt. Gleiches erfolgte für Geraden in Y-Richtung zur Ermittlung von Intensitätsdichtewerten IDY. An jenen Stellen, an welchen Glaskanten präsent sind, ergeben sich jeweilige lokale Maximalwerte bzw. Peaks PK. Es wird nun im Weiteren erläutert, auf welche Weise solche Intensitätsdichtewerte IDX, IDY und die Peak-Werte PK verwendet werden können, um Deckglasbereiche in ihrer Lage bzw. Position zu bestimmen.

Die Figur 13a zeigt hierzu Verfahrensschritte VE. Für die Bildinformation PDB des partiell abgedunkelten Durchlichtbildes sind auch beispielhafte Intensitätsdichtewerte IDX, IDY aufgetragen. Aus diesen Werten IDX, IDY wird der höchste Intensitätsdichtewert bzw. der dominante Peak DOP bestimmt. Dieser Peak DOP wird verwendet, um an der Stelle seiner Lage virtuell den Objektträger OT in zwei Deckglasbereiche DGBA, DGBB zu unterteilen. Die Überlegung ist es also, dass ein dominanter Peak eine Glaskante GKX indiziert, wie in Figur 13b dargestellt, bzw. die Lage einer Glaskante GKX, und dass dann der Objektträger OT in diese virtuellen Deckglasbereiche DGBA, DGBB unterteilt werden kann. Dieses erfolgt in einem ersten Verfahrensschritt VS1. Die Glaskante GKX kann zunächst als eine potentielle Glaskante angesehen werden. Damit die Glaskante GKX auch als eine tatsächliche Glaskante identifiziert wird, muss beispielsweise der Intensitätsdichtewert des dominanten Peaks DOP bzw. des Maximums vorzugsweise einen vorgegebenen Schwellenwert VW2 überschreiten. Intensitätsdichtewerte, welche diesen Schwellenwert VW2 nicht überschreiten, können als Rauschsignal oder Artefaktsignal klassifiziert werden, so dass eine als potentiell angesehene Glaskante nicht als tatsächliche identifiziert wird. Der Schwellenwert VW2 kann als eine Vorgabeinformation angesehen werden. Diese Überprüfung erfolgt in dem Verfahrensschritt VS2. Ferner muss vorzugsweise in dem Verfahrensschritt VS2 eine weitere Bedingung erfüllt sein. Diese weitere Bedingung ist, dass die sich ergebende Größe bzw. Ausbreitung der neu erstellten virtuellen Deckglasbereiche DGBA, DGBB eine Mindestgröße bzw. einen Mindestwert VW1 übersteigt. Diese Art einer Vorgabeinformation VW1 ist hilfreich, da hierdurch vermieden werden kann, aufgrund von Peaks mit bestimmten Intensitätsdichtewerten den Objektträger OT in zu kleine virtuelle Deckglasbereiche zu unterteilen.

Sind beide Bedingungen erfüllt, so wird in einem weiteren Verfahrensschritt VS3 eine Ausgabe bzw. Rückgabe der bestimmten Deckglasbereiche DGBA, DGBB durchgeführt.

Es wird dann das Verfahren VE rekursiv für zuvor bestimmte Deckglasbereiche DGBA, DGBB durchgeführt erneut durchgeführt, um auch diese zuvor bestimmten virtuellen Deckglasbereiche DGBA, DGBB ggf. noch weiter zu unterteilen.

Die Figur 13b zeigt eine beispielhafte Illustration eines Objektträgers OTX mit Glaskanten GKX und einem Artefaktsignal AFS. Es wird nun erläutert, wie mittels des Verfahrens aus Figur 13a der Objektträger mittels einer Detektion von potentiellen Glaskanten und einer Identifikation von tatsächlichen Glaskanten die tatsächlichen Deckglasbereiche DGB11, DGB121, DGB11222, DGB12211 und DGB12212 identifiziert werden können.

Es wird zunächst die Kante GKX1 als eine potentielle Glaskante detektiert. Mithilfe von Vorgabeinformation VW1, VW2 wird dann in dem Schritt S2 die potentielle Glaskante GKX1 als eine tatsächliche Glaskante identifiziert und die virtuellen Deckglasbereiche DGB11 sowie DGB12 bestimmt.

Es wird dann der virtuelle Deckglasbereich DGB11 betrachtet. Das Artefaktsignal AFS in dem Deckglasbereich DGB11 überschreitet in seiner Intensitätsdichte beispielsweise nicht den vorgegebenen Schwellenwert, sodass der Deckglasbereich DGB11 nicht weiter unterteilt wird und als Deckglasbereich identifiziert wird.

Der ermittelte, virtuelle Deckglasbereich DGB12 wird dann durch Detektion einer weiteren Glaskante GKX2 mittels eines weiteren dominanten Peaks in die Deckglasbereiche DGB121 und DGB122 unterteilt. Eine weitere Unterteilung des Deckglasbereiches DGB121 erfolgt deshalb nicht weiter, weil keine weiteren Glaskanten bzw. Peaks detektiert werden könne, welche die bezogen auf die Vorgabeinformationen gestellten Bedingungen erfüllen.

Der Deckglasbereich DGB122 wird aufgrund einer tatsächlichen Glaskante in die Deckglasbereiche DGB1221 und DGB1222 unterteilt. Schließlich wird der Deckglasbereich DGB1221 aufgrund einer tatsächlichen Glaskante in die Deckglasbereiche DGB12211 und DGB12212 unterteilt.

Es können also entsprechende Deckglasbereiche des Objektträgers OTX hinsichtlich ihrer jeweiligen räumlichen Lage bestimmt werden.

Zusammenfassend kann gesagt werden, dass auf Basis des partiell abgedunkelten Durchlichtbildes auf dem Objektträger OTX potentielle Glaskanten GKX, AFS detektieren werden, dass ferner auf Basis der potentiellen Glaskanten GKX, AFS und auf Basis wenigstens einer Vorgabeinformation VW1, VW2 tatsächliche Glaskanten GKX identifiziert werden und dass schließlich auf Basis der tatsächlichen Glaskanten GKX die Deckglasbereiche DGB11, DGB121, DGB11222, DGB12211 und DGB12212 identifiziert werden .

Unter Kenntnis dieser räumlichen Lagen der jeweiligen Deckglasbereiche können dann Gewebeschnitte, welche in entsprechenden Deckglasbereichen liegen, den jeweiligen Kennzeichnungen der jeweiligen Deckglasbereiche, in denen sie liegen, zugeordnet werden.

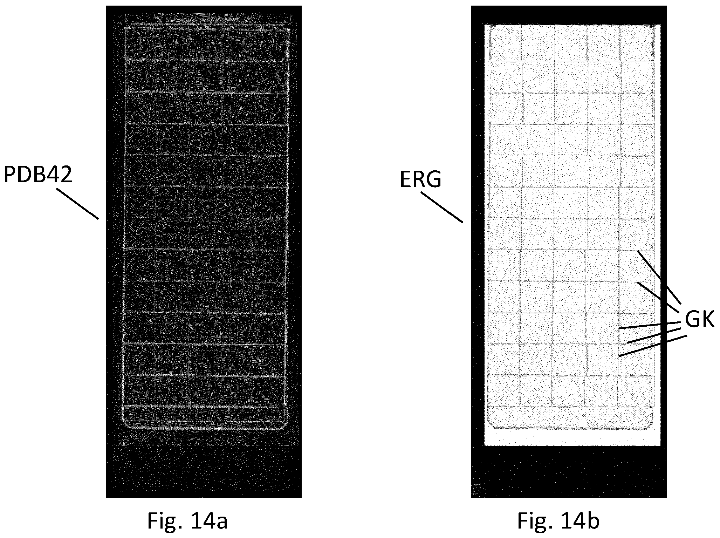

Die Figur 14a zeigt für die Bildinformation PD42 daneben in der Figur 14b das Detektionsergebnis ERG von Deckglasbereichen sowie die dazu eingezeichneten detektierten Glaskanten. Es wird ersichtlich, dass das hier vorgestellte Verfahren besonders leistungsfähig ist, da auch eine Mehrzahl kleinerer Deckglasbereiche sicher detektiert wird.

Die Figur 18 zeigt einen weiteren beispielhaften Objektträger OTY mit unterschiedlichen Gewebeschnitten GS, GSA, GSB, GSC und Kennungen K10, K20, K30, wobei insbesondere die Gewebeschnitte GSA, GSB sowie GSC innerhalb eines gesamten Bereiches GBZ einer Kennzeichnung K10 zuzuordnen sind. Es kann vorgesehen sein, dass mehrere Gewebeschnitte GSA, GSB, GSC gemeinsam auf einem Objektträger OTY vorhanden sind und auch gemeinsam einer Kennung K10 zugeordnet werden sollen, jedoch nicht durch ein gleiches, gemeinsames Deckglas sondern unterschiedliche Deckgläser DGBA1, DGBB1 dort positioniert sind. Daher wird ferner vorzugsweise vorgeschlagen, dass durch Verwendung des bisher beschriebenen Verfahrens zunächst auf Basis eines oder mehrerer partiell abgedunkelter Durchlichtbilder auf dem Objektträger vorhandene Glaskanten detektiert werden. Auf Basis der detektierten Glaskanten werden dann Deckglasbereiche DGBB1, DGBA1 identifiziert, wie zuvor beschrieben. Es kann dann eine weitere Vorgabeinformation bereitgestellt werden, um die identifizierten Deckglasbereiche DGBA1, DGBB1 in einen gemeinsamen Bereich GBZ zusammenzufassen und der Kennung K10 zuzuordnen. Die Vorgabeinformation kann beispielsweise darin bestehen, dass eine Mehrzahl an Deckglasbereichen DGBA1, DGBB1 in einer bevorzugten Ausbreitungsrichtung, in diesem Fall in Y-Richtung, bzw. in horizontaler Richtung, angeordnet sein können, wobei in dem Fall, dass für einen Deckglasbereich DGBB1 keine Kennzeichnung identifiziert wurde, dieser Deckglasbereich DGBB1 einer gleichen gemeinsamen Kennzeichnung K10 eines weiteren in einer bevorzugten Ausbreitungsrichtung angeordneten Deckglasbereiches DGBA1 zugeordnet wird. Wird also für einen Deckglasbereich DGBB1 keine Kennzeichnung erkannt bzw. identifiziert, so ist dieser Deckglasbereich DGBB1 der Kennzeichnung K10 des in einer bestimmten Richtung benachbarten Deckglasbereiches DGBA1 zuzuordnen, vorzugsweise nach rechts in horizontaler Richtung.

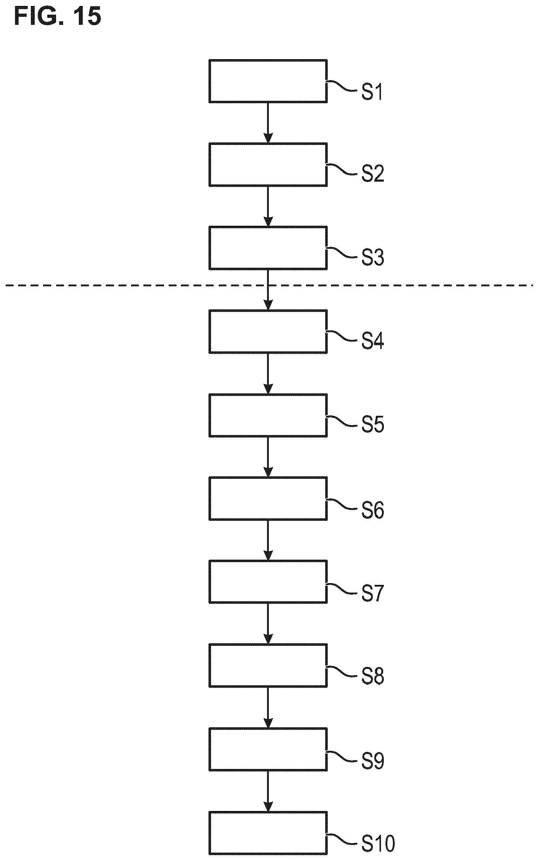

Die Erfindung und ihre Ausführungsformen wurden bisher anhand der erfindungsgemäßen Vorrichtung erläutert. Wie zuvor beschrieben, wird auch ein erfindungsgemäßes Verfahren vorgeschlagen. Die einzelnen Schritte des Verfahrens gemäß einer bevorzugten Ausführungsform sind in der Figur 15 illustriert.

In einem Schritt S1 erfolgt ein Positionieren des Objektträgers zwischen einer flächigen Lichtquelle und einer Bilderfassungseinheit.

In einem Schritt S2 erfolgt ein Vorsehen einer reversibel positionierbaren Spaltblende, welche mehrere Öffnungsspalte aufweist, zwischen der flächigen Lichtquelle und dem Objekt.

In einem Schritt S3 erfolgt ein Vorsehen einer Beleuchtungseinheit ausgebildet zum Beleuchten jener Oberfläche des Objektträgers, welche der Bilderfassungseinheit zugewandt ist.

In einem Schritt S4 wird dann in einem ersten Betriebszustand die flächige Lichtquelle aktiviert und mittels der Bilderfassungseinheit ein vollständig ausgeleuchtetes Durchlichtbild des Objektträgers erfasst.

In einem Schritt S5 wird dann in einem zweiten Betriebszustand die Beleuchtungseinheit aktiviert und mittels der Bilderfassungseinheit ein Auflichtbild des Objektträgers erfasst.

In einem dritten Betriebszustand wird dann in einem Schritt S6 die Spaltblende derart angesteuert, dass die Spaltblende zwischen der flächigen Lichtquelle und dem Objektträger positioniert ist, und ferner die flächige Lichtquelle aktiviert sowie mittels der Bilderfassungseinheit ein partiell abgedunkeltes Durchlichtbild des Objektträgers erfasst.

In einem Schritt S7 erfolgt dann ein Bestimmen jeweiliger räumlicher Positionen jeweiliger optischer Kennzeichnungen auf Basis des Auflichtbildes.

In einem Schritt S8 erfolgt dann ein Bestimmen jeweiliger räumlicher Lagen der jeweiligen Deckglasbereiche auf Basis des partiell abgedunkelten Durchlichtbildes.

In einem Schritt S9 erfolgt dann ein Bestimmen jeweiliger räumlicher Lagen der jeweiligen Gewebeschnitte auf Basis des vollständig ausgeleuchteten Durchlichtbildes.

In einem Schritt S10 erfolgt dann ein Zuordnen jeweiliger Gewebeschnitte zu jeweiligen optischen Kennzeichnungen.

Die Schritte S4 bis S10 werden vorzugsweise durch die Kontrolleinheit K aus der Figur 4 durchgeführt.

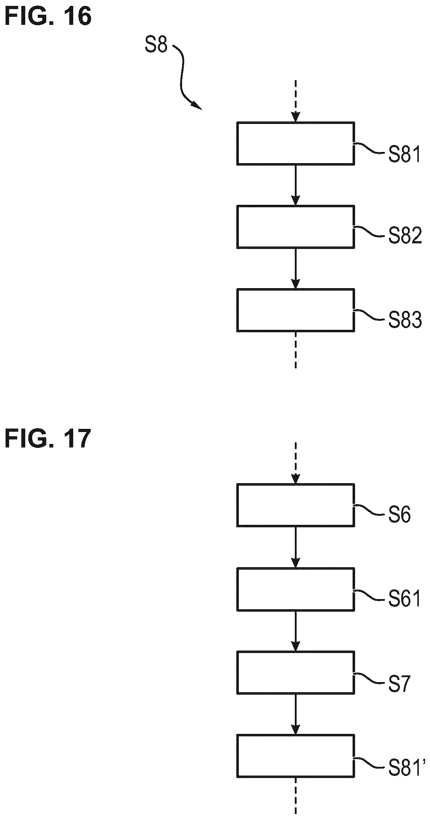

Die Figur 16 zeigt weitere bevorzugte Schritte.

Der Schritt S8 aus der Figur 15 erfolgt vorzugsweise durch Durchführung von weiteren Teilschritten S81, S82, S83.

In einem Schritt S81 erfolgt ein Detektieren von auf dem Objektträger vorhandener potentieller Glaskanten auf Basis des partiell abgedunkelten Durchlichtbildes. In einem Schritt S82 erfolgt eine Identifikation tatsächlicher Glaskanten auf Basis der potentiellen Glaskanten und wenigstens einer Vorgabeinformation VW1, VW2.

In einem Schritt S83 erfolgt dann eine Identifikation von Deckglasbereichen auf Basis der tatsächlichen Glaskanten.

Die Figur 17 zeigt weitere vorzugsweise auszuführende Schritte in dem Fall einer Verwendung mehrerer partiell abgedunkelter Durchlichtbilder. Anschließend an den bereits zuvor in der Figur 15 erläuterten Schritt S6 erfolgt in einem Schritt S61 in einem vierten Betriebszustand ein Ansteuern der zweiten Spaltblende derart, dass die zweite Spaltblende zwischen der flächigen Lichtquelle und dem Objektträger positioniert ist. Ferner erfolgt ein Aktivieren der Lichtquelle sowie ein Erfassen eines zweiten partiell abgedunkelten Durchlichtbildes mittels der Bilderfassungseinheit. Es schließt sich dann der bereits beschriebene Schritt S7 aus der Figur 15 an, in welchem jeweilige räumliche Positionen jeweiliger optischer Kennzeichnungen bestimmt werden. Daran schließt sich dann ein Schritt S81' an, in welchem auf Basis des ersten partiell abgedunkelten Durchlichtbildes und des zweiten partiell abgedunkelten Durchlichtbildes die jeweiligen räumlichen Lagen der jeweiligen Deckglasbereiche bestimmt werden.

Vorgeschlagen wird ferner ein digitales Bildverarbeitungsverfahren. Hierbei erfolgt ein Bereitstellen eines vollständig ausgeleuchteten Durchlichtbildes des Objektträgers, eines Auflichtbildes des Objektträgers sowie eines partiell abgedunkelten Durchlichtbildes des Objektträgers. Dieses Bereitstellen kann dadurch erfolgen, dass die Bilderfassungseinheit BE aus der Figur 4 diese Bilder an die Kontrolleinheit K bereitstellt. Ferner kann vorzugsweise das Bereitstellen dadurch erfolgen, dass die Kontrolleinheit K derartige Bilddaten BID, DT aus der Speichereinheit SPE in einen internen Speicher der Kontrolleinheit K lädt. Der interne Speicher ist der Speicher ISPE.

Das digitale Bildverarbeitungsverfahren kann ein computerlimitiertes Verfahren sein. Ferner kann ein Computerprogrammprodukt bereitgestellt werden, welches Befehle umfasst, die bei Ausführung des Programms durch einen Computer diesen veranlassen, das Verfahren als computerimplementiertes Verfahren auszuführen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die Kontrolleinheit K aus der Figur 4 kann auch als eine Recheneinheit implementiert werden, welche entsprechend wie zuvor beschrieben ausgebildet ist.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird. Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Eine programmierbare Hardwarekomponente als eine Recheneinheit kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikro-prozessor (FPGA = Field Programmable Gate Array) gebildet sein.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

## Patentansprüche

1. Vorrichtung zur Identifikation jeweiliger Deckglasbereiche (DGB) jeweiliger Deckgläser mit jeweiligen Gewebeschnitten (GS, GS1, GS2, GS3) auf einem Objektträger (OT), welcher mehrere optische Kennzeichnungen (KE1, KE2, KE3) aufweist, aufweisend
- eine flächige Lichtquelle (L),
- eine Bilderfassungseinheit (BE),
- eine Halterungseinheit (H) zum Positionieren des Objektträgers (OT) zwischen der flächigen Lichtquelle (L) und der Bilderfassungseinheit (BE),
- eine zwischen der flächigen Lichtquelle (L) und dem Objektträger (OT) reversibel positionierbare Spaltblende (SB, SB1), welche mehrere Öffnungsspalte (OS) aufweist,
- eine Beleuchtungseinheit (BL) ausgebildet zum Beleuchten jener Oberfläche (OFL) des Objektträgers (OT), welche der Bilderfassungseinheit (BE) zugewandt ist,
sowie ferner eine Kontrolleinheit (K), welche ausgebildet ist,
- in einem ersten Betriebszustand die flächige Lichtquelle (L) zu aktivieren sowie mittels der Bilderfassungseinheit (BE) ein vollständig ausgeleuchtetes Durchlichtbild (DB, DB2) des Objektträgers (OT) zu erfassen,
- ferner in einem zweiten Betriebszustand die Beleuchtungseinheit (BL) zu aktivieren sowie mittels der Bilderfassungseinheit (BE) ein Auflichtbild (AB, AB2) des Objektträgers (OT) zu erfassen,
wobei die Kontrolleinheit gekennzeichnet ist,
- ferner in einem dritten Betriebszustand die Spaltblende (SB, SB1) derart anzusteuern, dass die Spaltblende (SB, SB1) zwischen der flächigen Lichtquelle (L) und dem Objektträger (OT) positioniert ist, und die flächige Lichtquelle (L) zu aktivieren sowie mittels der Bilderfassungseinheit (BE) ein partiell abgedunkeltes Durchlichtbild (PDB3) des Objektträgers (OT) zu erfassen,
- ferner auf Basis des Auflichtbildes (AB, AB2) jeweilige räumliche Positionen (P1, P2, P3) jeweiliger optischer Kennzeichnungen (KE1, KE2, KE3) zu bestimmen,
- ferner auf Basis des partiell abgedunkelten Durchlichtbildes (PDB3) jeweilige räumliche Lagen der jeweiligen Deckglasbereiche (DGB) zu bestimmen,
- ferner auf Basis des vollständig ausgeleuchteten Durchlichtbildes (DB, DB2) jeweilige räumliche Lagen der jeweiligen Gewebeschnitte (GS, GS1, GS2, GS3) zu bestimmen
- sowie auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS1, GS2, GS3) die jeweiligen Gewebeschnitte den jeweiligen optischen Kennzeichnungen (KE1, KE2, KE3) zuzuordnen.

2. Vorrichtung nach Anspruch 1,
wobei die Kontrolleinheit (K) ferner ausgebildet ist,
- auf Basis des partiell abgedunkelten Durchlichtbildes (PDB3) auf dem Objektträger (OT) potentielle Glaskanten (GK) von Deckgläsern zu detektieren,
- sowie ferner auf Basis der potentiellen Glaskanten (GK) und auf Basis wenigstens einer Vorgabeinformation (VW1, VW2) tatsächliche Glaskanten (GK) von Deckgläsern zu identifizieren,
- sowie ferner auf Basis der tatsächlichen Glaskanten (GK) die Deckglasbereiche (DGB) zu identifizieren.

3. Vorrichtung nach Anspruch 1,
wobei die Spaltblende (SB1) eine erste Spaltblende ist und wobei das partiell abgedunkelte Bild ein erstes partiell abgedunkeltes Bild (PDB51) ist,
wobei die Vorrichtung (V) ferner eine zwischen der flächigen Lichtquelle (L) und dem Objektträger (OT) reversibel positionierbare zweite Spaltblende (SB2) aufweist, welche mehrere Öffnungsspalte (OS) aufweist,
wobei die Kontrolleinheit (K) ferner ausgebildet ist,
- in einem vierten Betriebszustand die zweite Spaltblende (SB2) derart anzusteuern, dass die zweite Spaltblende (SB2) zwischen der flächigen Lichtquelle (L) und dem Objektträger (OT) positioniert ist, und die flächige Lichtquelle (L) zu aktivieren sowie mittels der Bilderfassungseinheit (BE) ein zweites partiell abgedunkeltes Durchlichtbild (PDB52) des Objektträgers (OT) zu erfassen,
- sowie ferner auf Basis der partiell abgedunkelten Durchlichtbilder (PDB51, PDB52) die jeweiligen räumlichen Lagen der jeweiligen Deckglasbereiche (DGB) zu bestimmen.

4. Verfahren zur Identifikation jeweiliger Deckglasbereiche (DGB) jeweiliger Deckgläser mit jeweiligen Gewebeschnitten (GS, GS1, GS2, GS3) auf einem Objektträger (OT), welcher mehrere optische Kennzeichnungen (KE1, KE2, KE3) aufweist, aufweisend
- Positionieren des Objektträgers (OT) zwischen einer flächigen Lichtquelle (L) und einer Bilderfassungseinheit (BE),
- Vorsehen einer reversibel positionierbaren Spaltblende (SB, SB1), welche mehrere Öffnungsspalte (OS) aufweist, zwischen der flächigen Lichtquelle (L) und dem Objektträger (OT),
- Vorsehen einer Beleuchtungseinheit (BE) ausgebildet zum Beleuchten jener Oberfläche des Objektträgers (OT), welche der Bilderfassungseinheit (BE) zugewandt ist,
- in einem ersten Betriebszustand, Aktivieren der flächige Lichtquelle (L) sowie Erfassen eines vollständig ausgeleuchteten Durchlichtbildes (PDB3) des Objektträgers (OT) mittels der Bilderfassungseinheit (BE),
- in einem zweiten Betriebszustand, Aktivieren der Beleuchtungseinheit (BE) sowie Erfassen eines Auflichtbildes (AB) des Objektträgers (OT) mittels der Bilderfassungseinheit (BE),
**gekennzeichnet durch**,
- in einem dritten Betriebszustand, Ansteuern der Spaltblende (SB, SB1) derart, dass die Spaltblende (SB, SB1) zwischen der flächigen Lichtquelle (L) und dem Objektträger (OT) positioniert ist, und ferner Aktivieren der flächigen Lichtquelle (L) sowie Erfassen eines partiell abgedunkelten Durchlichtbildes (PDB3) des Objektträgers (OT) mittels der Bilderfassungseinheit (BE),
- Bestimmen jeweiliger räumlicher Positionen (P1, P2, P3) jeweiliger optischer Kennzeichnungen (KE1, KE2, KE3) auf Basis des Auflichtbildes (AB),
- Bestimmen jeweiliger räumlicher Lagen der jeweiligen Deckglasbereiche (DGB) auf Basis des partiell abgedunkelten Durchlichtbildes (PDB3),
- sowie ferner Bestimmen jeweiliger räumlicher Lagen der jeweiligen Gewebeschnitte (GS, GS1, GS2, GS3) auf Basis des vollständig ausgeleuchteten Durchlichtbildes (DB),
- sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

5. Verfahren nach Anspruch 4,
ferner aufweisend
- Detektieren potentieller Glaskanten (GK) von Deckgläsern auf dem Objektträger (OT) auf Basis des partiell abgedunkelten Durchlichtbildes (PDB3),
- Identifizieren tatsächlicher Glaskanten (GK) auf Basis auf Basis der potentiellen Glaskanten (GK) und auf Basis wenigstens einer Vorgabeinformation (VW1, VW2),
- sowie ferner Identifizieren der Deckglasbereiche (DGB) auf Basis der tatsächlichen Glaskanten (GK).

6. Verfahren nach Anspruch 4,
wobei die Spaltblende eine erste Spaltblende (SB1) ist und wobei das partiell abgedunkelte Bild ein erstes partiell abgedunkeltes Bild ist (PDB51),
ferner aufweisend
- Vorsehen einer zwischen der flächigen Lichtquelle (L) und dem Objektträger (OT) reversibel positionierbaren zweiten Spaltblende (SB2), welche mehrere Öffnungsspalte (OS) aufweist,
sowie ferner aufweisend,
- in einem vierten Betriebszustand, Ansteuern der zweiten Spaltblende (SB2) derart, dass die zweite Spaltblende (SB2) zwischen der flächigen Lichtquelle (L) und dem Objektträger (OT) positioniert ist, und ferner Aktivieren der flächigen Lichtquelle (L) aktivieren sowie Erfassen eines zweiten partiell abgedunkelten Durchlichtbildes (PDB52) des Objektträgers (OT) mittels der Bilderfassungseinheit (BE),
- sowie ferner Bestimmen der jeweiligen räumlichen Lagen der jeweiligen Deckglasbereiche (DGB) auf Basis der partiell abgedunkelten Durchlichtbilder (PDB51, PDB52).

7. Digitales Bildverarbeitungsverfahren zur Identifikation jeweiliger Deckglasbereiche (DGB) jeweiliger Deckgläser mit jeweiligen Gewebeschnitten (GS, GS1, GS2, GS3) auf einem Objektträger (OT), welcher mehrere optische Kennzeichnungen (KE1, KE2, KE3) aufweist, aufweisend
- Bereitstellen eines vollständig ausgeleuchteten Durchlichtbildes (DB) des Objektträgers (OT),
- Bereitstellen eines Auflichtbildes (AB) des Objektträgers (OT),
**gekennzeichnet durch** die Schritte
- Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind,
- Bestimmen jeweiliger räumlicher Positionen (P1, P2, P3) jeweiliger optischer Kennzeichnungen (KE1, KE2, KE3) auf Basis des Auflichtbildes (AB),
- Bestimmen jeweiliger räumlicher Lagen der jeweiligen Deckglasbereiche (DGB) auf Basis des partiell abgedunkelten Durchlichtbildes (PDB3),
- Bestimmen jeweiliger räumlicher Lagen der jeweiligen Gewebeschnitte (GS, GS1, GS2, GS3) auf Basis des vollständig ausgeleuchteten Durchlichtbildes (PB),
- sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

8. Computerimplementiertes Verfahren zur Identifikation jeweiliger Deckglasbereiche (DGB) jeweiliger Deckgläser mit jeweiligen Gewebeschnitten (GS, GS1, GS2, GS3) auf einem Objektträger (OT), welcher mehrere optische Kennzeichnungen (KE1, KE2, KE3) aufweist, aufweisend die Schritte
- Bereitstellen eines vollständig ausgeleuchteten Durchlichtbildes (DB) des Objektträgers (OT),
- Bereitstellen eines Auflichtbildes (AB) des Objektträgers (OT),
**gekennzeichnet durch** die Schritte
- Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind,
- Bestimmen jeweiliger räumlicher Positionen (P1, P2, P3) jeweiliger optischer Kennzeichnungen (KE1, KE2, KE3) auf Basis des Auflichtbildes (AB),
- Bestimmen jeweiliger räumlicher Lagen der jeweiligen Deckglasbereiche (DGB) auf Basis des partiell abgedunkelten Durchlichtbildes (PDB3),
- Bestimmen jeweiliger räumlicher Lagen der jeweiligen Gewebeschnitte (GS, GS1, GS2, GS3) auf Basis des vollständig ausgeleuchteten Durchlichtbildes (PB),
- sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

9. Computerprogrammprodukt, umfassend Befehle, die bei der Ausführung des Programms durch einen Computer diesen veranlassen, das computerimplementierte Verfahren nach Anspruch 8 auszuführen.

10. Recheneinheit zur Identifikation jeweiliger Deckglasbereiche (DGB) jeweiliger Deckgläser mit jeweiligen Gewebeschnitten (GS, GS1, GS2, GS3) auf einem Objektträger (OT), welcher mehrere optische Kennzeichnungen (KE1, KE2, KE3) aufweist, wobei die Recheneinheit ausgebildet ist zum
- Bereitstellen eines vollständig ausgeleuchteten Durchlichtbildes (DB) des Objektträgers (OT),
- Bereitstellen eines Auflichtbildes (AB) des Objektträgers (OT),
wobei die Recheneinheit **dadurch gekennzeichnet ist, dass** sie ferner ausgebildet ist zum
- Bereitstellen eines partiell abgedunkelten Durchlichtbildes (PDB3) des Objektträgers (OT), wobei ein partiell abgedunkeltes Durchlichtbild ein Durchlichtbild ist, bei welchem Teilbereiche der Gewebeschnitte und auch Teilbereiche von Glaskanten der Deckglasbereiche durch eine Spaltblende gegenüber einer Lichtquelle abgeschattet oder abgedunkelt sind und wobei ferner andere Teilbereiche der Gewebeschnitte und der Glaskanten der Deckglasbereiche nicht durch eine Spaltblende gegenüber der Lichtquelle abgeschattet oder abgedunkelt sind,
- Bestimmen jeweiliger räumlicher Positionen (P1, P2, P3) jeweiliger optischer Kennzeichnungen (KE1, KE2, KE3) auf Basis des Auflichtbildes (AB),
- Bestimmen jeweiliger räumlicher Lagen der jeweiligen Deckglasbereiche (DGB) auf Basis des partiell abgedunkelten Durchlichtbildes (PDB3),
- Bestimmen jeweiliger räumlicher Lagen der jeweiligen Gewebeschnitte (GS, GS1, GS2, GS3) auf Basis des vollständig ausgeleuchteten Durchlichtbildes (PB),
- sowie Zuordnen der jeweiligen Gewebeschnitte (GS, GS1, GS2, GS3) zu den jeweiligen optischen Kennzeichnungen (KE1, KE2, KE3) auf Basis der jeweiligen räumlichen Positionen (P1, P2, P3) der jeweiligen optischen Kennzeichnungen (KE1, KE2, KE3), auf Basis der jeweiligen räumlichen Lagen der jeweiligen Deckglasbereiche (DGB) und auf Basis der jeweiligen räumlichen Lagen der jeweiligen Gewebeschnitte (GS, GS1, GS2, GS3).

## Claims

1. An apparatus for identifying respective cover slip regions (DGB) of respective cover slips having respective tissue sections (GS, GS1, GS2, GS3) on a specimen slide (OT), which has multiple optical identifiers (KE1, KE2, KE3), including
- a planar light source (L),
- an image acquisition unit (BE),
- a holding unit (H) for positioning the specimen slide (OT) between the planar light source (L) and the image acquisition unit (BE),
- a slit diaphragm (SB, SB1) reversibly positionable between the planar light source (L) and the specimen slide (OT), which has multiple opening slits (OS),
- an illumination unit (BL) designed to illuminate that surface (OFL) of the specimen slide (OT) which faces toward the image acquisition unit (BE),
and furthermore a control unit (K), which is designed,
- in a first operating state, to activate the planar light source (L) and to acquire a completely illuminated transmitted light image (DB, DB2) of the specimen slide (OT) via the image acquisition unit (BE),
- furthermore, in a second operating state, to activate the illumination unit (BL) and to acquire an incident light image (AB, AB2) of the specimen slide (OT) via the image acquisition unit (BE),
wherein the control unit is **characterized in that**,
- furthermore, in a third operating state, to actuate the slit diaphragm (SB, SB1) in such a way that the slit diaphragm (SB, SB1) is positioned between the planar light source (L) and the specimen slide (OT), and to activate the planar light source (L) and to acquire a partially darkened transmitted light image (PDB3) of the specimen slide (OT) via the image acquisition unit (BET),
- to furthermore determine, on the basis of the incident light image (AB, AB2), respective spatial positions (P1, P2, P3) of respective optical identifiers (KE1, KE2, KE3),
- furthermore, on the basis of the partially darkened transmitted light image (PDB3), to determine respective spatial locations of the respective cover slip regions (DGB),
- furthermore, on the basis of the completely illuminated transmitted light image (DB, DB2), to determine respective spatial locations of the respective tissue sections (GS, GS1, GS2, GS3)
- and, on the basis of the respective spatial positions (P1, P2, P3) of the respective optical identifiers (KE1, KE2, KE3), on the basis of the respective spatial locations of the respective cover slip regions (DGB), and on the basis of the respective spatial locations of the respective tissue sections (GS1, GS2, GS3), to assign the respective tissue sections to the respective optical identifiers (KE1, KE2, KE3).

2. The apparatus as claimed in claim 1,
wherein the monitoring unit (K) is furthermore designed,
- on the basis of the partially darkened transmitted light image (PDB3) to detect potential glass edges (GK) of cover slips on the specimen slide (OT),
- and furthermore on the basis of the potential glass edges (GK) and on the basis of at least one item of specification information (VW1, VW2), to identify actual glass edges (GK) of cover slips,
- and furthermore to identify the cover slip regions (DGB) on the basis of the actual glass edges (GK).

3. The apparatus as claimed in claim 1,
wherein the slit diaphragm (SB1) is a first slit diaphragm and wherein the partially darkened image is a first partially darkened image (PDB51),
wherein the apparatus (V) furthermore has a second slit diaphragm (SB2) reversibly positionable between the planar light source (L) and the specimen slide (OT), which has multiple opening slits (OS),
wherein the control unit (K) is furthermore designed,
- in a fourth operating state, to actuate the second slit diaphragm (SB2) in such a way that the second slit diaphragm (SB2) is positioned between the planar light source (L) and the specimen slide (OT), and to activate the planar light source (L) and to acquire a second partially darkened transmitted light image (PDB52) of the specimen slide (OT) via the image acquisition unit (BE),
- and furthermore, on the basis of the partially darkened transmitted light images (PDB51, PDB52) to determine the respective spatial locations of the respective cover slip regions (DGB).

4. A method for identifying respective cover slip regions (DGB) of respective cover slips having respective tissue sections (GS, GS1, GS2, GS3) on a specimen slide (OT), which has multiple optical identifiers (KE1, KE2, KE3), including
- positioning the specimen slide (OT) between a planar light source (L) and an image acquisition unit (BE),
- providing a reversibly positionable slit diaphragm (SB, SB1), which has multiple opening slits (OS), between the planar light source (L) and the specimen slide (OT),
- providing an illumination unit (BE), designed to illuminate that surface of the specimen slide (OT), which faces toward the image acquisition unit (BE),
- in a first operating state, activating the planar light source (L) and acquiring a completely illuminated transmitted light image (PDB3) of the specimen slide (OT) via the image acquisition unit (BE),
- in a second operating state, activating the illumination unit (BE) and acquiring an incident light image (AB) of the specimen slide (OT) via the image acquisition unit (BE),
**characterized by**,
- in a third operating state, actuating the slit diaphragm (SB, SB1) in such a way that the slit diaphragm (SB, SB1) is positioned between the planar light source (L) and the specimen slide (OT), and furthermore activating the planar light source (L) and acquiring a partially darkened transmitted light image (PDB3) of the specimen slide (OT) via the image acquisition unit (BE),
- determining respective spatial positions (P1, P2, P3) of respective optical identifiers (KE1, KE2, KE3) on the basis of the incident light image (AB),
- determining respective spatial locations of the respective cover slip regions (DGB) on the basis of the partially darkened transmitted light image (PDB3),
- and furthermore determining respective spatial locations of the respective tissue sections (GS, GS1, GS2, GS3) on the basis of the completely illuminated transmitted light image (DB)
- and assigning the respective tissue sections (GS, GS1, GS2, GS3) to the respective optical identifiers (KE1, KE2, KE3) on the basis of the respective spatial positions (P1, P2, P3) of the respective optical identifiers (KE1, KE2, KE3), on the basis of the respective spatial locations of the respective cover slip regions (DGB), and on the basis of the respective spatial locations of the respective tissue sections (GS, GS1, GS2, GS3).

5. The method as claimed in claim 4,
furthermore including
- detecting potential glass edges (GK) of cover slips on the specimen slide (OT) on the basis of the partially darkened transmitted light image (PDB3),
- identifying actual glass edges (GK) on the basis on the basis of the potential glass edges (GK) and on the basis of at least one item of specification information (VW1, VW2),
- and furthermore identifying the cover slip regions (DGB) on the basis of the actual glass edges (GK).

6. The method as claimed in claim 4,
wherein the slit diaphragm is a first slit diaphragm (SB1) and wherein the partially darkened image is a first partially darkened image (PDB51),
furthermore including
- providing a second slit diaphragm (SB2) reversibly positionable between the planar light source (L) and the specimen slide (OT), which has multiple opening slits (OS),
and furthermore including,
- in a fourth operating state, actuating the second slit diaphragm (SB2) in such a way that the second slit diaphragm (SB2) is positioned between the planar light source (L) and the specimen slide (OT), and furthermore activating the planar light source (L) and acquiring a second partially darkened transmitted light image (PDB52) of the specimen slide (OT) via the image acquisition unit (BE),
- and furthermore determining the respective spatial locations of the respective cover slip regions (DGB) on the basis of the partially darkened transmitted light images (PDB51, PDB52).

7. A digital image processing method for identifying respective cover slip regions (DGB) of respective cover slips having respective tissue sections (GS, GS1, GS2, GS3) on a specimen slide (OT), which has multiple optical identifiers (KE1, KE2, KE3), including
- providing a completely illuminated transmitted light image (DB) of the specimen slide (OT),
- providing an incident light image (AB) of the specimen slide (OT),
**characterized by** the steps
- providing a partially darkened transmitted light image (PDB3) of the specimen slide (OT), wherein a partially darkened transmitted light image is a transmitted light image in which portions of the tissue sections and also portions of glass edges of the cover slip regions are shaded or darkened by a slit diaphragm in relation to a light source and wherein furthermore other portions of the tissue sections and the glass edges of the cover slip regions are not shaded or darkened by a slit diaphragm in relation to the light source,
- determining respective spatial positions (P1, P2, P3) of respective optical identifiers (KE1, KE2, KE3) on the basis of the incident light image (AB),
- determining respective spatial locations of the respective cover slip regions (DGB) on the basis of the partially darkened transmitted light image (PDB3),
- determining respective spatial locations of the respective tissue sections (GS, GS1, GS2, GS3) on the basis of the completely illuminated transmitted light image (PB),
- and assigning the respective tissue sections (GS, GS1, GS2, GS3) to the respective optical identifiers (KE1, KE2, KE3) on the basis of the respective spatial positions (P1, P2, P3) of the respective optical identifiers (KE1, KE2, KE3), on the basis of the respective spatial locations of the respective cover slip regions (DGB), and on the basis of the respective spatial locations of the respective tissue sections (GS, GS1, GS2, GS3).

8. A computer-implemented method for identifying respective cover slip regions (DGB) of respective cover slips having respective tissue sections (GS, GS1, GS2, GS3) on a specimen slide (OT), which has multiple optical identifiers (KE1, KE2, KE3), including the following steps
- providing a completely illuminated transmitted light image (DB) of the specimen slide (OT),
- providing an incident light image (AB) of the specimen slide (OT),
**characterized by** the steps
- providing a partially darkened transmitted light image (PDB3) of the specimen slide (OT), wherein a partially darkened transmitted light image is a transmitted light image in which portions of the tissue sections and also portions of glass edges of the cover slip regions are shaded or darkened by a slit diaphragm in relation to a light source and wherein furthermore other portions of the tissue sections and the glass edges of the cover slip regions are not shaded or darkened by a slit diaphragm in relation to the light source,
- determining respective spatial positions (P1, P2, P3) of respective optical identifiers (KE1, KE2, KE3) on the basis of the incident light image (AB),
- determining respective spatial locations of the respective cover slip regions (DGB) on the basis of the partially darkened transmitted light image (PDB3),
- determining respective spatial locations of the respective tissue sections (GS, GS1, GS2, GS3) on the basis of the completely illuminated transmitted light image (PB),
- and assigning the respective tissue sections (GS, GS1, GS2, GS3) to the respective optical identifiers (KE1, KE2, KE3) on the basis of the respective spatial positions (P1, P2, P3) of the respective optical identifiers (KE1, KE2, KE3), on the basis of the respective spatial locations of the respective cover slip regions (DGB), and on the basis of the respective spatial locations of the respective tissue sections (GS, GS1, GS2, GS3).

9. A computer program product, comprising commands which, upon the execution of the program by a computer, cause it to carry out the computer-implemented method as claimed in claim 8.

10. A computing unit for identifying respective cover slip regions (DGB) of respective cover slips having respective tissue sections (GS, GS1, GS2, GS3) on a specimen slide (OT), which has multiple optical identifiers (KE1, KE2, KE3), wherein the computing unit is designed to
- provide a completely illuminated transmitted light image (DB) of the specimen slide (OT),
- provide an incident light image (AB) of the specimen slide (OT),
wherein the computing unit is **characterized by** being furthermore designed to
- provide a partially darkened transmitted light image (PDB3) of the specimen slide (OT), wherein a partially darkened transmitted light image is a transmitted light image in which portions of the tissue sections and also portions of glass edges of the cover slip regions are shaded or darkened by a slit diaphragm in relation to a light source and wherein furthermore other portions of the tissue sections and the glass edges of the cover slip regions are not shaded or darkened by a slit diaphragm in relation to the light source,
- determine respective spatial positions (P1, P2, P3) of respective optical identifiers (KE1, KE2, KE3) on the basis of the incident light image (AB),
- determine respective spatial locations of the respective cover slip regions (DGB) on the basis of the partially darkened transmitted light image (PDB3),
- determine respective spatial locations of the respective tissue sections (GS, GS1, GS2, GS3) on the basis of the completely illuminated transmitted light image (PB),
- and assign the respective tissue sections (GS, GS1, GS2, GS3) to the respective optical identifiers (KE1, KE2, KE3) on the basis of the respective spatial positions (P1, P2, P3) of the respective optical identifiers (KE1, KE2, KE3), on the basis of the respective spatial locations of the respective cover slip regions (DGB), and on the basis of the respective spatial locations of the respective tissue sections (GS, GS1, GS2, GS3).

## Revendications

1. Dispositif pour l'identification de zones de lamelle couvre-objet (DGB) respectives de lamelles couvre-objet respectives comprenant des coupes histologiques (GS, GS1, GS2, GS3) respectives sur une lame (OT), qui possède plusieurs marquages optiques (KE1, KE2, KE3), comprenant
- une source de lumière (L) plane,
- une unité d'acquisition d'images (BE),
- une unité de maintien (H) servant au positionnement de la lame (OT) entre la source de lumière (L) plane et l'unité d'acquisition d'images (BE),
- un diaphragme à fentes (SB, SB1), positionnable de manière réversible entre la source de lumière (L) et la lame (OT), lequel possède plusieurs fentes d'ouverture (OS),
- une unité d'éclairage (BL) configurée pour éclairer la surface (OFL) de la lame (OT) qui fait face à l'unité d'acquisition d'images (BE),
ainsi qu'en outre une unité de commande (K) qui est configurée pour
- dans un premier état opérationnel, activer la source de lumière (L) plane et aussi, au moyen de l'unité d'acquisition d'images (BE), acquérir une image en transparence (DB, DB2) entièrement éclairée de la lame (OT),
- en outre dans un deuxième état opérationnel, activer l'unité d'éclairage (BL) et aussi, au moyen de l'unité d'acquisition d'images (BE), acquérir une image d'éclairage incident (AB, AB2) de la lame (OT),
l'unité de contrôle étant **caractérisée** pour
- en outre dans un troisième état opérationnel, commander le diaphragme à fentes (SB, SB1) de telle sorte que le diaphragme à fentes (SB, SB1) est positionné entre la source de lumière (L) plane et la lame (OT), et activer la source de lumière (L) plane et aussi, au moyen de l'unité d'acquisition d'images (BE), acquérir une image en transparence partiellement assombrie (PDB3) de la lame (OT),
- en outre, sur la base de l'image d'éclairage incident (AB, AB2), déterminer les positions dans l'espace (P1, P2, P3) respectives des marquages optiques (KE1, KE2, KE3) respectifs,
- en outre, sur la base de l'image en transparence partiellement assombrie (PDB3), déterminer les positions dans l'espace respectives des zones de lamelle couvre-objet (DGB) respectives,
- en outre, sur la base de l'image en transparence (DB, DB2) entièrement éclairée, déterminer les positions dans l'espace respectives des coupes histologiques (GS, GS1, GS2, GS3) respectives
- ainsi que sur la base des positions dans l'espace (P1, P2, P3) respectives des marquages optiques (KE1, KE2, KE3) respectifs, sur la base des positions dans l'espace respectives des zones de lamelle couvre-objet (DGB) respectives et sur la base des positions dans l'espace respectives des coupes histologiques (GS1, GS2, GS3) respectives, affecter les coupes histologiques respectives aux marquages optiques (KE1, KE2, KE3) respectifs.

2. Dispositif selon la revendication 1,
l'unité de contrôle (K) étant en outre configurée pour
- sur la base de l'image en transparence partiellement assombrie (PDB3), détecter sur la lame (OT) les bords de verre (GK) potentiels des lamelles couvre-objet,
- ainsi que sur la base des bords de verre (GK) potentiels et sur la base d'au moins une information de spécification (VW1, VW2), identifier les bords de verre (GK) réels des lamelles couvre-objet,
- ainsi que sur la base des bords de verre (GK) réels, identifier les zones de lamelle couvre-objet (DGB).

3. Dispositif selon la revendication 1,
le diaphragme à fentes (SB1) étant un premier diaphragme à fentes et l'image partiellement assombrie étant une première image partiellement assombrie (PDB51), le dispositif (V) possédant en outre un deuxième diaphragme à fentes (SB2), positionnable de manière réversible entre la source de lumière (L) et la lame (OT), lequel possède plusieurs fentes d'ouverture (OS),
l'unité de contrôle (K) étant en outre configurée pour
- dans un quatrième état opérationnel, commander le deuxième diaphragme à fentes (SB2) de telle sorte que le deuxième diaphragme à fentes (SB2) est positionné entre la source de lumière (L) plane et la lame (OT), et activer la source de lumière (L) plane et aussi, au moyen de l'unité d'acquisition d'images (BE), acquérir une deuxième image en transparence (PDB52) partiellement assombrie de la lame (OT),
- ainsi que sur la base des images en transparence partiellement assombries (PDB51, PDB52), déterminer les positions dans l'espace respectives des zones de lamelle couvre-objet (DGB) respectives.

4. Procédé pour l'identification de zones de lamelle couvre-objet (DGB) respectives de lamelles couvre-objet respectives comprenant des coupes histologiques (GS, GS1, GS2, GS3) respectives sur une lame (OT), qui possède plusieurs marquages optiques (KE1, KE2, KE3), comprenant
- positionner la lame (OT) entre une source de lumière (L) plane et une unité d'acquisition d'images (BE),
- prévoir un diaphragme à fentes (SB, SB1), positionnable de manière réversible entre la source de lumière (L) et la lame (OT), lequel possède plusieurs fentes d'ouverture (OS),
- prévoir une unité d'éclairage (BE) configurée pour éclairer la surface de la lame (OT) qui fait face à l'unité d'acquisition d'images (BE),
- dans un premier état opérationnel, activer la source de lumière (L) plane et aussi acquérir une image en transparence (PDB3) entièrement éclairée de la lame (OT), au moyen de l'unité d'acquisition d'images (BE),
- dans un deuxième état opérationnel, activer l'unité d'éclairage (BE) et aussi acquérir une image d'éclairage incident (AB) de la lame (OT) au moyen de l'unité d'acquisition d'images (BE),
**caractérisée par**
- dans un troisième état opérationnel, commander le diaphragme à fentes (SB, SB1) de telle sorte que le diaphragme à fentes (SB, SB1) est positionné entre la source de lumière (L) plane et la lame (OT), et en outre activer la source de lumière (L) plane et aussi acquérir une image en transparence partiellement assombrie (PDB3) de la lame (OT) au moyen de l'unité d'acquisition d'images (BE),
- déterminer les positions dans l'espace (P1, P2, P3) respectives des marquages optiques (KE1, KE2, KE3) respectifs sur la base de l'image d'éclairage incident (AB),
- déterminer les positions dans l'espace respectives des zones de lamelle couvre-objet (DGB) respectives sur la base de l'image en transparence partiellement assombrie (PDB3),
- et aussi en outre déterminer les positions dans l'espace respectives des coupes histologiques (GS, GS1, GS2, GS3) respectives sur la base de l'image en transparence entièrement éclairée (DB),
- ainsi qu'affecter les coupes histologiques (GS, GS1, GS2, GS3) respectives aux marquages optiques (KE1, KE2, KE3) respectifs sur la base des positions dans l'espace (P1, P2, P3) respectives des marquages optiques (KE1, KE2, KE3) respectifs, sur la base des positions dans l'espace respectives des zones de lamelle couvre-objet (DGB) respectives et sur la base des positions dans l'espace respectives des coupes histologiques (GS, GS1, GS2, GS3) respectives.

5. Procédé selon la revendication 4,
comprenant en outre
- détecter, sur la lame (OT), les bords de verre (GK) potentiels des lamelles couvre-objet sur la base de l'image en transparence partiellement assombrie (PDB3),
- identifier les bords de verre (GK) réels des lamelles couvre-objet sur la base sur la base des bords de verre (GK) potentiels et sur la base d'au moins une information de spécification (VW1, VW2),
- et aussi identifier les zones de lamelle couvre-objet (DGB) sur la base des bords de verre (GK) réels.

6. Procédé selon la revendication 4,
le diaphragme à fentes étant un premier diaphragme à fentes (SB1) et l'image partiellement assombrie étant une première image partiellement assombrie (PDB51), comprenant en outre
- prévoir un deuxième diaphragme à fentes (SB2), positionnable de manière réversible entre la source de lumière (L) et la lame (OT), lequel possède plusieurs fentes d'ouverture (OS),
comprenant en outre
- dans un quatrième état opérationnel, commander le deuxième diaphragme à fentes (SB2) de telle sorte que le deuxième diaphragme à fentes (SB2) est positionné entre la source de lumière (L) plane et la lame (OT), et en outre activer la source de lumière (L) plane et aussi acquérir une deuxième image en transparence (PDB52) partiellement assombrie de la lame (OT) au moyen de l'unité d'acquisition d'images (BE),
- ainsi que déterminer les positions dans l'espace respectives des zones de lamelle couvre-objet (DGB) respectives sur la base des images en transparence partiellement assombries (PDB51, PDB52).

7. Procédé de traitement d'image numérique pour l'identification de zones de lamelle couvre-objet (DGB) respectives de lamelles couvre-objet respectives comprenant des coupes histologiques (GS, GS1, GS2, GS3) respectives sur une lame (OT), qui possède plusieurs marquages optiques (KE1, KE2, KE3), comprenant
- fournir une image en transparence entièrement éclairée (DB) de la lame (OT),
- fournir une image d'éclairage incident (AB) de la lame (OT),
**caractérisé par** les étapes suivantes
- fournir une image en transparence partiellement assombrie (PDB3) de la lame (OT), une image en transparence partiellement assombrie étant une image en transparence avec laquelle des zones partielles des coupes histologiques ainsi que des zones partielles des bords de verre des zones de lamelle couvre-objet sont ombragées ou assombries par rapport à une source de lumière et en outre d'autres zones partielles des coupes histologiques et des bords de verre des zones de lamelle couvre-objet ne sont pas ombragées ou assombries par rapport à une source de lumière,
- déterminer les positions dans l'espace (P1, P2, P3) respectives des marquages optiques (KE1, KE2, KE3) respectifs sur la base de l'image d'éclairage incident (AB),
- déterminer les positions dans l'espace respectives des zones de lamelle couvre-objet (DGB) respectives sur la base de l'image en transparence partiellement assombrie (PDB3),
- déterminer les positions dans l'espace respectives des coupes histologiques (GS, GS1, GS2, GS3) respectives sur la base de l'image en transparence entièrement éclairée (PB),
- ainsi qu'affecter les coupes histologiques (GS, GS1, GS2, GS3) respectives aux marquages optiques (KE1, KE2, KE3) respectifs sur la base des positions dans l'espace (P1, P2, P3) respectives des marquages optiques (KE1, KE2, KE3) respectifs, sur la base des positions dans l'espace respectives des zones de lamelle couvre-objet (DGB) respectives et sur la base des positions dans l'espace respectives des coupes histologiques (GS, GS1, GS2, GS3) respectives.

8. Procédé mis en oeuvre par ordinateur pour l'identification de zones de lamelle couvre-objet (DGB) respectives de lamelles couvre-objet respectives comprenant des coupes histologiques (GS, GS1, GS2, GS3) respectives sur une lame (OT), qui possède plusieurs marquages optiques (KE1, KE2, KE3), comprenant les étapes suivantes
- fournir une image en transparence entièrement éclairée (DB) de la lame (OT),
- fournir une image d'éclairage incident (AB) de la lame (OT),
**caractérisé par** les étapes suivantes
- fournir une image en transparence partiellement assombrie (PDB3) de la lame (OT), une image en transparence partiellement assombrie étant une image en transparence avec laquelle des zones partielles des coupes histologiques ainsi que des zones partielles des bords de verre des zones de lamelle couvre-objet sont ombragées ou assombries par un diaphragme à fentes par rapport à une source de lumière et en outre d'autres zones partielles des coupes histologiques et des bords de verre des zones de lamelle couvre-objet ne sont pas ombragées ou assombries par un diaphragme à fentes par rapport à une source de lumière,
- déterminer les positions dans l'espace (P1, P2, P3) respectives des marquages optiques (KE1, KE2, KE3) respectifs sur la base de l'image d'éclairage incident (AB),
- déterminer les positions dans l'espace respectives des zones de lamelle couvre-objet (DGB) respectives sur la base de l'image en transparence partiellement assombrie (PDB3),
- déterminer les positions dans l'espace respectives des coupes histologiques (GS, GS1, GS2, GS3) respectives sur la base de l'image en transparence entièrement éclairée (PB),
- ainsi qu'affecter les coupes histologiques (GS, GS1, GS2, GS3) respectives aux marquages optiques (KE1, KE2, KE3) respectifs sur la base des positions dans l'espace (P1, P2, P3) respectives des marquages optiques (KE1, KE2, KE3) respectifs, sur la base des positions dans l'espace respectives des zones de lamelle couvre-objet (DGB) respectives et sur la base des positions dans l'espace respectives des coupes histologiques (GS, GS1, GS2, GS3) respectives.

9. Produit de programme informatique, comprenant des instructions qui, lors de l'exécution du programme par un ordinateur, amènent celui-ci à mettre en oeuvre le procédé mis en oeuvre par ordinateur selon la revendication 8.

10. Unité de calcul pour l'identification de zones de lamelle couvre-objet (DGB) respectives de lamelles couvre-objet respectives comprenant des coupes histologiques (GS, GS1, GS2, GS3) respectives sur une lame (OT), qui possède plusieurs marquages optiques (KE1, KE2, KE3), l'unité de calcul étant configurée pour
- fournir une image en transparence entièrement éclairée (DB) de la lame (OT),
- fournir une image d'éclairage incident (AB) de la lame (OT),
l'unité de calcul étant **caractérisé en ce qu'**elle est en outre configurée pour
- fournir une image en transparence partiellement assombrie (PDB3) de la lame (OT), une image en transparence partiellement assombrie étant une image en transparence avec laquelle des zones partielles des coupes histologiques ainsi que des zones partielles des bords de verre des zones de lamelle couvre-objet sont ombragées ou assombries par un diaphragme à fentes par rapport à une source de lumière et en outre d'autres zones partielles des coupes histologiques et des bords de verre des zones de lamelle couvre-objet ne sont pas ombragées ou assombries par un diaphragme à fentes par rapport à une source de lumière,
- déterminer les positions dans l'espace (P1, P2, P3) respectives des marquages optiques (KE1, KE2, KE3) respectifs sur la base de l'image d'éclairage incident (AB),
- déterminer les positions dans l'espace respectives des zones de lamelle couvre-objet (DGB) respectives sur la base de l'image en transparence partiellement assombrie (PDB3),
- déterminer les positions dans l'espace respectives des coupes histologiques (GS, GS1, GS2, GS3) respectives sur la base de l'image en transparence entièrement éclairée (PB),
- ainsi qu'affecter les coupes histologiques (GS, GS1, GS2, GS3) respectives aux marquages optiques (KE1, KE2, KE3) respectifs sur la base des positions dans l'espace (P1, P2, P3) respectives des marquages optiques (KE1, KE2, KE3) respectifs, sur la base des positions dans l'espace respectives des zones de lamelle couvre-objet (DGB) respectives et sur la base des positions dans l'espace respectives des coupes histologiques (GS, GS1, GS2, GS3) respectives.
